(19) Europäisches Patentamt
European Patent Office
Office européen des brevets

(11) EP 3 184 558 B1

(12) EUROPEAN PATENT SPECIFICATION

(45) Date of publication and mention of the grant of the patent:
**29.08.2018 Bulletin 2018/35**

(21) Application number: **15834254.3**

(22) Date of filing: **14.07.2015**

(51) Int Cl.:
***C08F 12/34*** (2006.01) ***B01J 41/14*** (2006.01)
***B01J 47/12*** (2017.01) ***C08F 2/50*** (2006.01)
***C08J 5/22*** (2006.01)

(86) International application number:
**PCT/JP2015/070193**

(87) International publication number:
**WO 2016/027595 (25.02.2016 Gazette 2016/08)**

(54) **COMPOSITION FOR FORMING POLYMERIC MEMBRANE, PROCESS FOR PRODUCING SAME, POLYMERIC MEMBRANE, SEPARATION MEMBRANE MODULE, AND ION EXCHANGE DEVICE**

ZUSAMMENSETZUNG ZUR HERSTELLUNG EINER POLYMERMEMBRAN, VERFAHREN ZUR HERSTELLUNG DAVON, POLYMERMEMBRAN, TRENNUNGSMEMBRANMODUL UND IONENAUSTAUSCHVORRICHTUNG

COMPOSITION POUR LA FORMATION D’UNE MEMBRANE POLYMÈRE, SON PROCÉDÉ DE PRODUCTION, MEMBRANE POLYMÈRE, MODULE DE MEMBRANE DE SÉPARATION ET DISPOSITIF D’ÉCHANGE D’IONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2014 JP 2014166366**

(43) Date of publication of application:
**28.06.2017 Bulletin 2017/26**

(73) Proprietor: **Fujifilm Corporation**
**Minato-ku**
**Tokyo 106-8620 (JP)**

(72) Inventors:
- **INOUE Kazuomi**
**Kanagawa 258-8577 (JP)**
- **INOMATA Sotaro**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**WO-A1-2013/155608**
**WO-A1-2015/030070**
**WO-A1-2015/030072**
**CN-A- 1 560 090**
**CN-A- 102 304 200**
**CN-A- 102 304 201**
**JP-A- H0 728 194**
**JP-A- S61 204 235**
**JP-A- 2005 314 646**
**JP-A- 2009 193 957**

- **ZARRAS PETER ET AL: "Polycationic salts. 3. Synthesis, styrene based trialkylammonium salts and their polymerization", JOURNAL OF MACROMOLECULAR SCIENCE , PART A - PURE AND APPLIED CHEMIS, MARCEL DEKKER INC, US, vol. 37, no. 8, 1 January 2000 (2000-01-01), pages 817-840, XP009094868, ISSN: 1060-1325, DOI: 10.1081/MA-100101125**
- **PETER ZARRAS ET AL.: ’Polycationic Salts. 3. Synthesis, Styrene Based Trialkylammonium Salts and Their Polymerization’ J.M.S. PURE APPL. CHEM. vol. A37, no. 8, 2000, pages 817 - 840, XP009094868**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

1. Field of the Invention

The present invention relates to a composition for forming a polymer membrane, a method for manufacturing the same, a polymer membrane, a separation membrane module, and an ion exchange device.

2. Description of the Related Art

An ion-exchange membrane is used for electrodeionization (EDI), continuous electrodeionization (CEDI), electrodiaysis (ED), electrodialysis reversal (EDR), and the like.

EDI is a water treatment process of removing ions from an aqueous liquid using an ion-exchange membrane and potential for achieving ion transport. Unlike other water purification techniques such as ion exchange used in the related art, EDI does not need to use an acid or a chemical such as sodium hydroxide and can be used for producing ultrapure water. ED and EDR are electrochemical separation processes of removing ions and the like from water and other fluids.

As ion-exchange membranes of the related art, for example, those described in JP2012-79619A and JP2005-66599A are known.

### SUMMARY OF THE INVENTION

An object of the present invention is to provide a composition for forming a polymer membrane that makes it possible to form a polymer membrane satisfying both of a low electrical resistance and a low water permeability and shortens the time required for curing, a method for manufacturing the composition, a polymer membrane, a separation membrane module, and an ion exchange device.

The above object of the present invention was achieved by means described in the following <1> to <20> including preferred embodiments.

<1> A composition for forming a polymer membrane, comprising a polymerization initiator, which has a light absorption coefficient of equal to or greater than $3 \times 10^2$ $mL \cdot g^{-1} \cdot cm^{-1}$ with respect to light having a wavelength of 365 nm, as a component A, a polymerization initiator which is a liquid at 25°C as a component B, and a polymerizable compound represented by Formula CL as a component C, in which a mass ratio of component A:component B is 15:85 to 85:15,

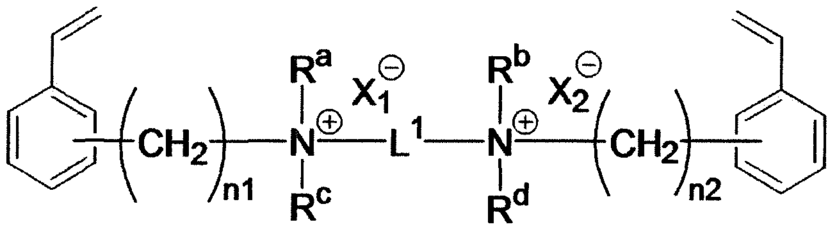

(CL)

In Formula CL, $L^1$ represents an alkylene group or an alkenylene group. $R^a$, $R^b$, $R^c$, and $R^d$ each independently represent an alkyl group or an aryl group, $R^a$ and $R^b$, and/or $R^c$ and $R^d$ may form a ring by being bonded to each other, n1 and n2 each independently represent an integer of 1 to 10, and $X_1^-$ and $X_2^-$ each independently represent an organic or inorganic anion,

<2> The composition for forming a polymer membrane described in <1>, in which a content of water is 10% to 40% by mass with respect to a total mass of the composition,

<3> The composition for forming a polymer membrane described in <1> or <2>, in which the component A contains at least one of the compounds represented by Formulae A-1 to A-8,

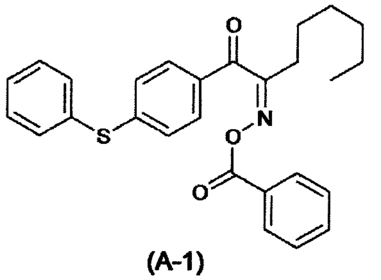

(A-1)

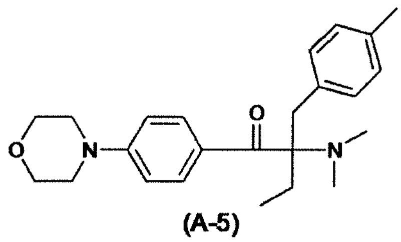

(A-5)

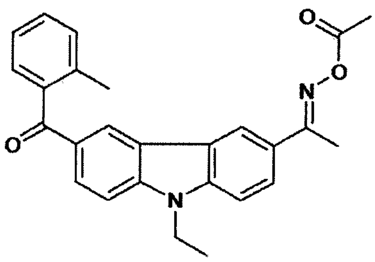

(A-2)

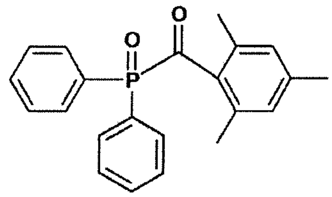

(A-6)

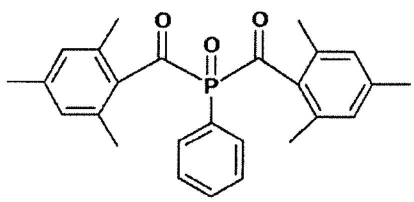

(A-3)

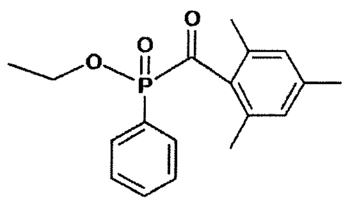

(A-7)

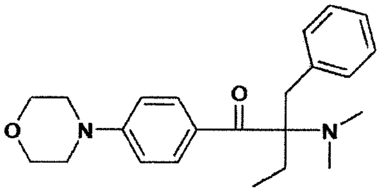

(A-4)

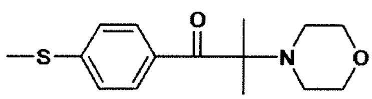

(A-8)

<4> The composition for forming a polymer membrane described in any one of <1> to <3>, further comprising a polymerizable compound represented by Formula SM,

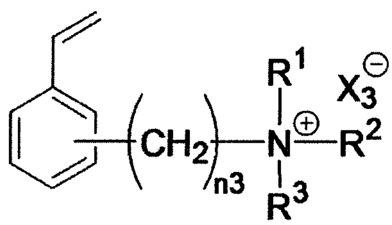

(SM)

In Formula SM, $R^1$, $R^2$, and $R^3$ each independently represent a linear or branched alkyl group or an aryl group, $R^1$ and $R^2$, or $R^1$, $R^2$, and $R^3$ may form an aliphatic heterocycle by being bonded to each other, n3 represents an integer of 1 to 10, and $X_3^-$ represents an organic or inorganic anion,

<5> The composition for forming a polymer membrane described in <4>, in which a content of the polymerizable

compound represented by Formula SM is 1% to 80% by mass with respect to a mass of total solid contents of the composition,

<6> The composition for forming a polymer membrane described in any one of <1> to <5>, in which a content of the polymerizable compound represented by Formula CL is 10% to 98% by mass with respect to a mass of total solid contents of the composition,

<7> The composition for forming a polymer membrane described in any one of <1> to <6>, in which a content of the component A is 0.2% to 2.5% by mass with respect to a total mass of the composition,

<8> The composition for forming a polymer membrane described in any one of <1> to <7>, in which a mass ratio between a content of the component A and a content of the component C (component A:component C) is 1:99 to 7:93,

<9> The composition for forming a polymer membrane described in any one of <1> to <8>, in which a mass ratio between a content of the component A and a content of the component B (component A:component B) is 25:75 to 60:40,

<10> The composition for forming a polymer membrane described in any one of <1> to <9>, further comprising a solvent as a component D,

<11> The composition for forming a polymer membrane described in <10>, in which the component D contains water and a water-soluble organic solvent,

<12> A method for producing a composition for forming a polymer membrane, comprising, dissolving a polymerization initiator as a component A, which has a light absorption coefficient of equal to or greater than $3 \times 10^2$ $mL \cdot g^{-1} \cdot cm^{-1}$ with respect to light having a wavelength of 365 nm, in a polymerization initiator as a component B which is a liquid at 25°C to prepare a mixed solution of initiators, dissolving a polymerizable compound as a component C represented by Formula CL in a mixed solvent obtained by mixing together two or more of solvent to prepare a monomer solution, and mixing together the mixed solution of initiators and the monomer solution,

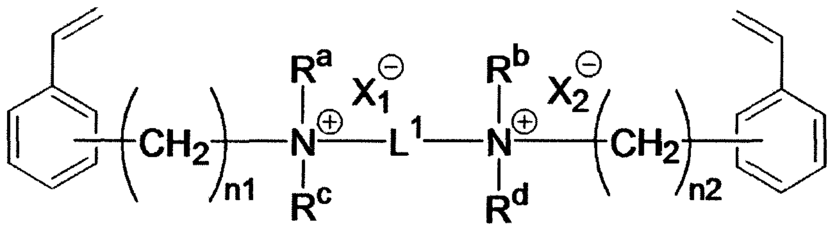

(CL)

In Formula CL, $L^1$ represents an alkylene group or an alkenylene group. $R^a$, $R^b$, $R^c$, and $R^d$ each independently represent an alkyl group or an aryl group, $R^a$ and $R^b$, and/or $R^c$ and $R^d$ may form a ring by being bonded to each other, n1 and n2 each independently represent an integer of 1 to 10, and $X_1^-$ and $X_2^-$ each independently represent an organic or inorganic anion,

<13> The method for producing a composition for forming a polymer membrane described in <12>, in which the mixed solvent is a solvent obtained by mixing water with a water-soluble organic solvent,

<14> The method for producing a composition for forming a polymer membrane described in <12> or <13>, in which a content of the water-soluble organic solvent is 20% to 40% by mass with respect to a total mass of the mixed solvent,

<15> The method for producing a composition for forming a polymer membrane described in any one of <12> to <14>, in which a content of the component C is 30% to 70% by mass with respect to a mass of total solid contents of the monomer solution,

<16> A polymer membrane obtained by polymerizing the composition for forming a polymer membrane described in any one of <1> to <11> or polymerizing the composition for forming a polymer membrane produced by the method described in any one of <12> to <15>,

<17> The polymer membrane described in <16>, comprising a porous support,

<18> The polymer membrane described in <16> or <17>, in which the polymerizing is performed by heating and/or irradiation of an energy ray,

<19> A separation membrane module comprising the polymer membrane described in <17>,

<20> An ion exchange device comprising the polymer membrane described in <17>.

According to the present invention, it is possible to provide a composition for forming a polymer membrane that makes it possible to form a polymer membrane satisfying both of a low electrical resistance and a low water permeability and shortens the time required for curing, a method for manufacturing the composition, a polymer membrane, a separation membrane module, and an ion exchange device.

## BRIEF DESCRIPTION OF THE DRAWING

Fig. 1 is a schematic view of a flow channel of a device for measuring a water permeability of a membrane.

## DESCRIPTION OF THE PREFERRED EMBODIMENTS

Hereinafter, the contents of the present invention will be specifically described. The following constituents will be described based on typical embodiments of the present invention in some cases, but the present invention is not limited to the embodiments. In the present specification, "to" is used to signify that numerical values listed before and after "to" are a lower limit and an upper limit respectively.

In the present specification, in a case where there is no description regarding whether or not a group (atomic group) is substituted or unsubstituted, the group includes both of a group not having a substituent and a group having a substituent. For example, an "alkyl group" includes not only an alkyl group not having a substituent (unsubstituted alkyl group) but also an alkyl group having a substituent (substituted alkyl group).

In the present specification, some chemical structural formulae will be described as simplified structural formulae in which a hydrogen atom is omitted.

In the present specification, "(meth)acrylate" represents acrylate and methacrylate, "(meth)acryl" represents acryl and methacryl, and "(meth)acryloyl" represents acryloyl and methacryloyl.

In the present invention, "% by mass" has the same definition as "% by weight", and "part by mass" has the same definition as "part by weight".

In the present invention, a combination of preferred aspects is a more preferred aspect.

(Composition for forming polymer membrane)

A composition for forming a polymer membrane (hereinafter, referred to as a "composition" as well) of the present invention contains a polymerization initiator, which has a light absorption coefficient of equal to or greater than $3 \times 10^2$ mL·g$^{-1}$·cm$^{-1}$ with respect to light having a wavelength of 365 nm, as a component A, a polymerization initiator which is a liquid at 25°C as a component B, and a polymerizable compound represented by Formula CL as a component C.

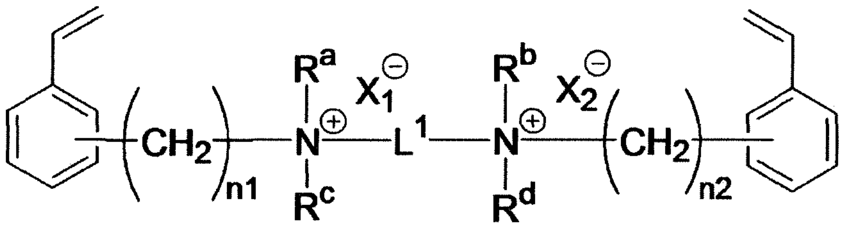

(CL)

In Formula CL, $L^1$ represents an alkylene group or an alkenylene group. $R^a$, $R^b$, $R^c$, and $R^d$ each independently represent an alkyl group or an aryl group, $R^a$ and $R^b$, and/or $R^c$ and $R^d$ may form a ring by being bonded to each other, n1 and n2 each independently represent an integer of 1 to 10, and $X_1^-$ and $X_2^-$ each independently represent an organic or inorganic anion.

As a result of conducting intensive investigation, the inventors of the present invention found that, the composition for forming a polymer membrane that contains the components A to C has excellent photocuring properties, and a polymer membrane obtained by photocuring the composition for forming a membrane is suitable as an ion-exchange membrane, and has a low water permeability, a low electrical resistance, and high hot water resistance.

The ion-exchange membranes described in JP2012-79619A and JP2005-66599A have problems in that they have a high water permeability and a high electrical resistance and require great energy for performing electrodialysis. Furthermore, in a case where thermal curing is used for preparing the membrane, at least several hours are required to prepare the membrane. As a result of conducting intensive investigation, the inventors of the present invention found that, when a polymerization initiator such as the component B that is a liquid at room temperature and the component A as a polymerization initiator which is water-insoluble but has high sensitivity are used simultaneously, a membrane can be prepared by performing photopolymerization of the component C which is a water-soluble monomer. It was confirmed that, according to the above aspect, the time required for preparing the membrane can be greatly shortened, and various characteristics described above are markedly improved. The mechanism of action is unclear, but is assumed to be as below.

Presumably, during thermal curing that requires a long time for curing, phase separation may occur between

the components of copolymerization, and hence a uniform membrane may not be easily formed. In contrast, during photocuring using a polymerization initiator having high sensitivity or during thermal curing finished within a short period of time, a curing time is short, and hence curing may be finished before phase separation occurs between the components, a uniform membrane may be formed, and an electrical resistance or a water permeability may be reduced.

The reason why the aforementioned hot water resistance is improved is unclear, but is assumed to be as below. Presumably, in a case where the curing time is long, the irradiation of high-intensity UV is conducted for a long time, and hence a portion of the membrane structure may be destroyed, hot water may be easily incorporated into the membrane, and a change of the membrane structure may be accelerated. In contrast, in a case where an ion-curable membrane is obtained using the composition for forming a polymer membrane of the present invention, a uniform membrane may be obtained because the UV irradiation time is reduced, and a change of the membrane structure caused by hot water may be inhibited.

Hereinafter, each component constituting the polymer membrane of the present invention will be described.

Component A: polymerization initiator having light absorption coefficient of equal to or greater than $3 \times 10^2$ $mL \cdot g^{-1} \cdot cm^{-1}$ with respect to light having wavelength of 365 nm

The composition for forming a polymer membrane of the present invention contains, as a component A, a polymerization initiator having a light absorption coefficient of equal to or greater than $3 \times 10^2$ $mL \cdot g^{-1} \cdot cm^{-1}$ with respect to light having a wavelength 365 nm (hereinafter, simply referred to as a "light absorption coefficient" as well).

The light absorption coefficient with respect to light having a wavelength of 365 nm can be calculated by measuring an absorbance of a sample obtained by mixing 1 mg of a polymerization initiator with 100 mL of acetonitrile and correcting the measured value by the following Formula I.

$$A \times 100 \times (1/L) \qquad \text{Formula (I)}$$

In Formula I, A represents a measured value of an absorbance, and L represents an optical path length (cm) in the measured sample.

The component A is preferably a photopolymerization initiator, and more preferably a photoradical polymerization initiator.

Examples of the component A used in the composition for forming a polymer membrane of the present invention preferably include an oxime ester compound, an acylphosphine oxide compound, and an $\alpha$-aminoalkylketone compound.

[Oxime ester compound]

As the oxime ester compound, it is possible to use the compounds described in JP2000-80068A, JP2001-233842A, JP2004-534797A, JP2007-231000A, and JP2009-134289A.

The oxime ester compound is preferably a compound represented by the following Formula O-1 or O-2.

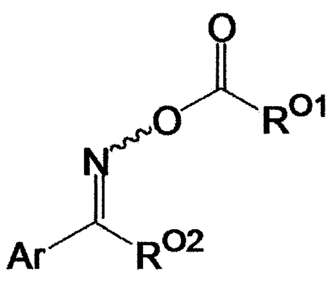

( O-1 )

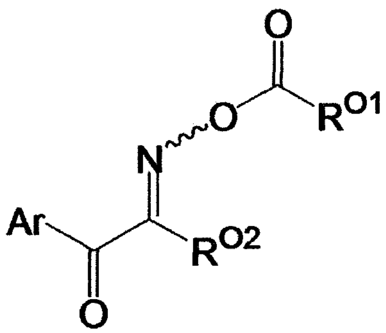

( O-2 )

In Formula O-1 or O-2, Ar represents an aromatic group or a heteroaromatic group, $R^{O1}$ represents an alkyl group, an aromatic group, or an alkyloxy group, $R^{O2}$ represents a hydrogen atom or an alkyl group. $R^{O2}$ and the Ar group may form a ring by being bonded to each other.

Ar represents an aromatic group or a heteroaromatic group. Ar is preferably a group obtained by removing one hydrogen atom on an aromatic ring from a benzene ring compound, a naphthalene ring compound, or a carbazole ring compound, and more preferably a naphthalenyl group forming a ring together with $R^{O7}$ or a carbazolyl group. Examples of a heteroatom in the heteroaromatic group preferably include a nitrogen atom, an oxygen atom, and a sulfur atom.

$R^{O1}$ represents an alkyl group, an aromatic group, or an alkyloxy group. $R^{O1}$ is preferably a methyl group, an ethyl group, a benzyl group, a phenyl group, a naphthyl group, a methoxy group, or an ethoxy group, and more preferably a methyl group, an ethyl group, a phenyl group, or a methoxy group.

$R^{O2}$ represents a hydrogen atom or an alkyl group. $R^{O2}$ is preferably a hydrogen atom or a substituted alkyl group, and more preferably a hydrogen atom, a substitued alkyl group forming a ring together wth Ar, or a toluene thioalkyl group.

Ar is preferably a group having 4 to 20 carbon atoms, $R^{O1}$ is preferably a group having 1 to 30 carbon atoms, and $R^{O2}$ is preferably a group having 1 to 50 carbon atoms.

The oxime ester compound is more preferably a compound represented by the following Formula O-3, O-4, O-5, or O-6.

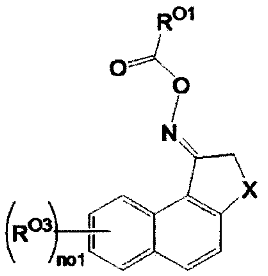

(O-3)

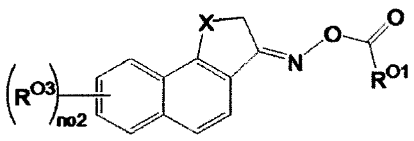

(O-4)

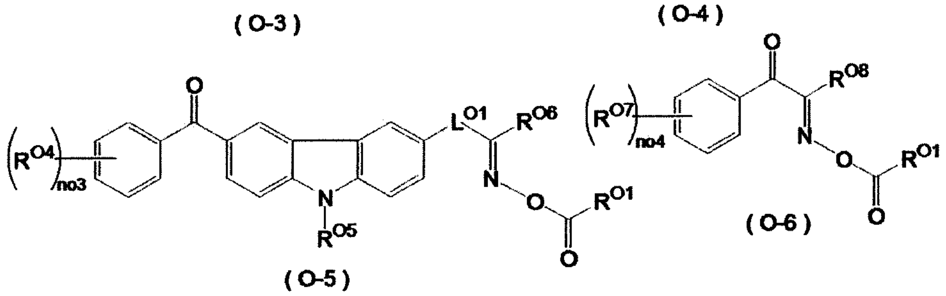

(O-6)

(O-5)

In Formulae O-3 to O-6, $R^{O1}$ represents an alkyl group, an aromatic group, or an alkoxy group, X represents $-CH_2-$, $-C_2H_4-$, -O-, or -S-, $R^{O3}$ each independently represents a halogen atom, $R^{O4}$ each independently represents an alkyl group, a phenyl group, an alkyl-substituted amino group, an arylthio group, an alkylthio group, an alkoxy group, an aryloxy group, or a halogen atom, $R^{O5}$ represents a hydrogen atom, an alkyl group, or an aryl group, $R^{O6}$ represents an alkyl group, no1 and no2 each independently represent an integer of 0 to 6, and no3 and no4 each independently represent an integer of 0 to 5.

$R^{O1}$ represents an alkyl group, an aromatic group, or an alkoxy group. $R^{O1}$ is preferably a group represented by $R^{11}$-X'-alkylene group- ($R^{11}$ represents an alkyl group or an aryl group, and X' represents a sulfur atom or an oxygen atom). $R^{11}$ is preferably an aryl group, and more preferably a phenyl group. The alkyl group and the aryl group as $R^{11}$ may be substituted with a halogen atom (preferably a fluorine atom, a chlorine atom, or a bromine atom) or an alkyl group.

X is preferably a sulfur atom.

$R^{O3}$ and $R^{O4}$ can be bonded to each other in any position on an aromatic ring.

$R^{O4}$ represents an alkyl group, a phenyl group, an alkyl-substituted amino group, an arylthio group, an alkylthio group, an alkoxy group, an aryloxy group, or a halogen atom. $R^{O4}$ is preferably an alkyl group, a phenyl group, an arylthio group, or a halogen atom, more preferably an alkyl group, an arylthio group, or a halogen atom, and even more preferably an alkyl group or a halogen atom. The alkyl group is preferably an alkyl group having 1 to 5 carbon atoms, and more preferably a methyl group or an ethyl group. The halogen atom is preferably a chlorine atom, a bromine atom, or a fluorine atom.

The number of carbon atoms of $R^{O4}$ is preferably 0 to 50, and more preferably 0 to 20.

$R^{O5}$ represents a hydrogen atom, an alkyl group, or an aryl group. $R^{O5}$ is preferably an alkyl group. The alkyl group is preferably an alkyl group having 1 to 5 carbon atoms, and more preferably a methyl group or an ethyl group. The aryl group is preferably an aryl group having 6 to 10 carbon atoms.

$R^{O6}$ represents an alkyl group which is preferably an alkyl group having 1 to 5 carbon atoms and more preferably a methyl group or an ethyl group.

$R^{O7}$ represents an alkyl group, a phenyl group, an alkyl-substituted amino group, an arylthio group, an alkylthio group, an alkoxy group, an aryloxy group, or a halogen atom. $R^{O7}$ is preferably an alkyl group, a phenyl group, an arylthio group, or a halogen atom, more preferably an alkyl group, an arylthio group, or a halogen atom, and even more preferably

an arylthio group. The alkyl group is preferably an alkyl group having 1 to 5 carbon atoms, and more preferably a methyl group or an ethyl group. The arylthio group is preferably an arylthio group having 6 to 12 carbon atoms, and more preferably a phenylthio group.

$R^{O8}$ represents an alkyl group which is preferably an alkyl group having 1 to 10 carbon atoms and more preferably an alkyl group having 3 to 7 carbon atoms.

$L^{O1}$ represents a divalent linking group. $L^{O1}$ is preferably a carbonyl group or a single bond, and more preferably a single bond.

no1 and no2 each represent the number of substituting $R^{O3}$'s on the aromatic ring in Formula O-3 or O-4, and no3 represents the number of substituting $R^{O4}$'s on the aromatic ring in Formula O-5. no4 represents the number of substituting $R^{O7}$'s on the aromatic ring in Formula O-6.

no1 to no4 each independently preferably represent an integer of 0 to 2, and more preferably represent 0 or 1.

Examples of the oxime ester compound preferably used in the present invention will be shown below. It goes without saying that the oxime ester compound used in the present invention is not limited thereto. Me represents a methyl group, and Ph represents a phenyl group. A cis-trans isomer of a double bond of oxime in these compounds may be any one of E and Z or may be a mixture of E and Z.

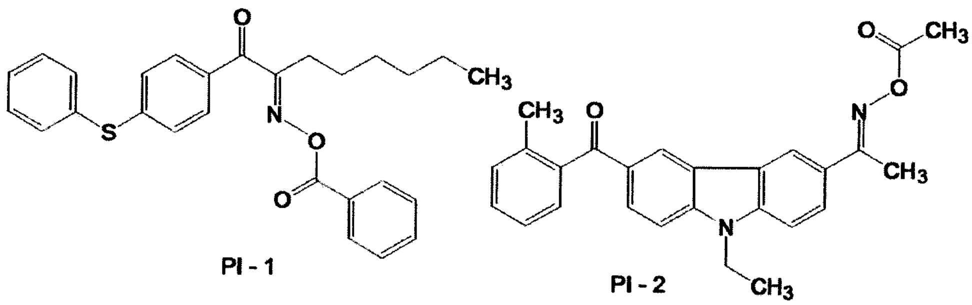

PI - 1

PI - 2

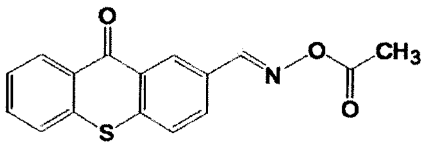

PI - 3

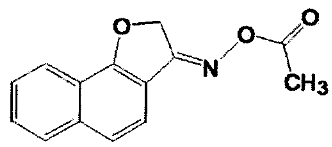

PI - 4

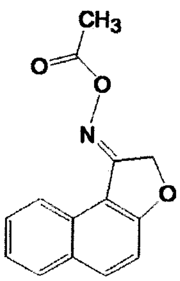

PI - 5

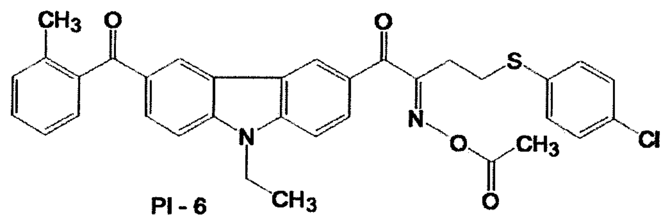

PI - 6

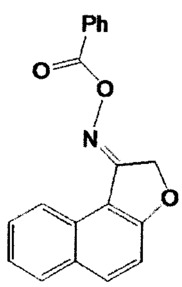

PI - 7

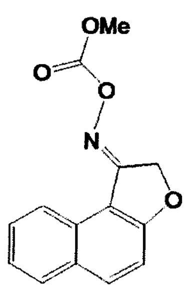

PI - 8

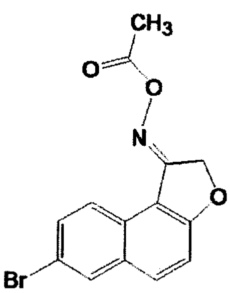

PI - 9

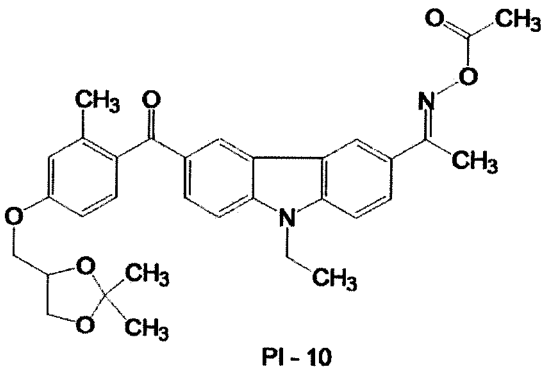

PI - 10

Among these, as the oxime ester compound in the present invention, compounds PI-1 (1,2-octanedione,1-[4-(phenylthio)-,2-(O-benzoyloxime)] (Irgacure OXE01, manufactured by BASF SE, light absorption coefficient: 6,969)) and PI-2 (ethanone, 1-[9-ethyl-6-(2-methylbenzoyl)-9H-carbazol-3-yl]-, 1-(O-acetyloxime) (Irgacure OXE02, manufactured by BASF SE, light absorption coefficient: 7,749)) are preferable.

[Acylphosphine oxide compound]

Examples of the acylphosphine oxide compound include a compound having a structure represented by Formula 7 or 8 in the structure of the compound.

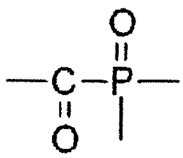

(7)

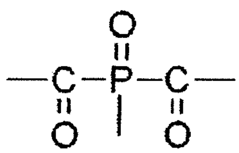

(8)

As the acylphosphine oxide compound, a compound represented by Formula 9 or 10 is particularly preferable.

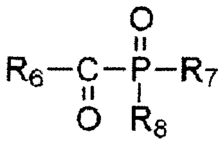

(9)

In the formula, $R_6$, $R_7$, and $R_8$ represent an aromatic hydrocarbon group which may have a methyl group or an ethyl group as a substituent.

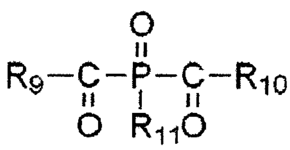

(10)

In the formula, $R_9$, $R_{10}$, and $R_{11}$ represent an aromatic hydrocarbon group which may have a methyl group or an ethyl group as a substituent.

As the acylphosphine oxide compound, it is possible to use a monoacylphosphine oxide compound, a bisacylphosphine oxide compound, and the like. As the monoacylphosphine oxide compound, known monoacylphosphine oxide compounds can be used, and examples thereof include monoacylphosphine oxide compounds described in

JP1985-8047B (JP-S60-8047B) and JP1988-40799B (JP-S63-40799B).

Specific examples of the monoacylphosphine oxide compound include isobutyryl methyl phosphinic acid methyl ester, isobutyryl phenyl phosphinic acid methyl ester, pivaloyl phenyl phosphinic acid methyl ester, 2-ethylhexanoyl phenyl phosphinic acid methyl ester, pivaloyl phenyl phosphinic acid isopropyl ester, p-toluylphenyl phosphinic acid methyl ester, o-toluylphenyl phosphinic acid methyl ester, 2,4-dimethylbenzoyl phenyl phosphinic acid methyl ester, p-t-butylbenzoyl phenyl phosphinic acid isopropyl ester, acryloyl phenyl phosphinic acid methyl ester, isobutyryl diphenyl phosphine oxide, 2-ethylhexanoyl diphenyl phosphine oxide, o-toluyldiphenyl phosphine oxide, p-t-butylbenzoyl diphenyl phosphine oxide, 3-pyridylcarbonyl diphenyl phosphine oxide, acryloyl diphenyl phosphine oxide, benzoyl diphenyl phosphine oxide, pivaloyl phenyl phosphinic acid vinyl ester, adipoyl bisdiphenyl phosphine oxide, pivaloyl diphenyl phosphine oxide, p-toluyldiphenyl phosphine oxide, 4-(t-butyl)benzoyldiphenyl phosphine oxide, terephthaloyl bisdiphenyl phosphine oxide, 2-methylbenzoyl diphenyl phosphine oxide, 2-methyl-2-ethylhexanoyl diphenyl phosphine oxide, 1-methyl-cyclohexanoyl diphenyl phosphine oxide, 2,4,6-trimethylbenzoyl diphenyl phosphine oxide, and the like.

As the bisacylphosphine oxide compound, known bisacylphosphine oxide compounds can be used, and examples thereof include bisacylphosphine oxide compounds described in JP1991-101686A (JP-H03-101686A), JP1993-345790A (JP-H05-345790A), and JP1994-298818A (JP-H06-298818A).

Specific examples of the bisacylphosphine oxide compound include bis(2,6-dichlorobenzoyl)phenyl phosphine oxide (MW: 472.1), bis(2,6-dichlorobenzoyl)-2,5-dimethylphenyl phosphine oxide, bis(2,6-dichlorobenzoyl)-4-ethoxyphenyl phosphine oxide, bis(2,6-dichlorobenzoyl)-4-propylphenyl phosphine oxide, bis(2,6-dichlorobenzoyl)-2-naphthyl phosphine oxide, bis(2,6-dichlorobenzoyl)-1-naphthyl phosphine oxide, bis(2,6-dichlorobenzoyl)-4-chlorophenyl phosphine oxide, bis(2,6-dichlorobenzoyl)-2,4-dimethoxyphenyl phosphine oxide, bis(2,6-dichlorobenzoyl)decyl phosphine oxide, bis(2,6-dichlorobenzoyl)-4-octylphenyl phosphine oxide, bis(2,4,6-trimethylbenzoyl)phenyl phosphine oxide, bis(2,4,6-trimethylbenzoyl)-2,5-dimethylphenyl phosphine oxide, bis(2,6-dichloro-3,4,5-trimethoxybenzoyl)-2,5-dimethylphenyl phosphine oxide (MW: 632.3), bis(2,6-dichloro-3,4,5-trimethoxybenzoyl)-4-ethoxyphenyl phosphine oxide, bis(2-methyl-1-naphthoyl)-2,5-dimethylphenyl phosphine oxide, bis(2-methyl-1-naphthoyl)-4-ethoxyphenyl phosphine oxide, bis(2-methyl-1-naphthoyl)-2-naphthyl phosphine oxide, bis(2-methyl-1-naphthoyl)-4-propylphenyl phosphine oxide, bis(2-methyl-1-naphthoyl)-2,5-dimethylphenyl phosphine oxide, bis(2-methoxy-1-naphthoyl)-4-ethoxyphenyl phosphine oxide, bis(2-chloro-1-naphthoyl)-2,5-dimethylphenyl phosphine oxide, bis(2,6-dimethoxybenzoyl)-2,4,4-trimethylpentyl phosphine oxide, and the like.

Among these, as the acylphosphine oxide compound in the present invention, bis(2,4,6-trimethylbenzoyl)phenyl phosphine oxide (IRGACURE 819: manufactured by BASF SE, light absorption coefficient:2,309), bis(2,6-dimethoxybenzoyl)-2,4,4-trimethylpentylphenyl phosphine oxide, 2,4,6-trimethylbenzoyldiphenyl phosphine oxide (Darocur TPO: manufactured by Ciba Specialty Chemicals Inc, Lucirin TPO: manufactured by BASF SE, light absorption coefficient: 472), 2,4,6-trimethylbenzoylphenyl phosphate (Lucirin TPO-L: manufactured by BASF SE, light absorption coefficient: 450), and the like are preferable.

[α-Aminoalkyl ketone compound]

As the α-aminoalkyl ketone compound, an α-aminoalkyl phenone compound represented by Formula AK-1 is preferable.

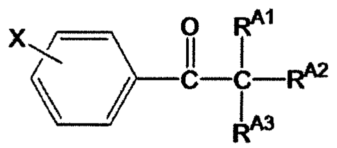

(AK-1)

In Formula AK-1, $R^{A1}$, $R^{A2}$, and $R^{A3}$ each independently represent a hydroxyl group, an alkyl group having 1 to 10 carbon atoms that may have a substituent, an alkoxy group having 1 to 10 carbon atoms that may have a substituent, or an amino group that may have a substituent. At least one of $R^{A1}$, $R^{A2}$, or $R^{A3}$ represents an amino group. X represents a hydrogen atom, an amino group that may have a substituent, an alkylthio group that may have a substituent, or an alkyl group that may have a substituent. In a case where at least one of $R^{A1}$, $R^{A2}$, $R^{A3}$, or X is an amino group, these may form a heterocyclic group by being bonded to each other.

As the component AK-1, a compound represented by any one of Formulae AK-2 and AK-3 is preferable.

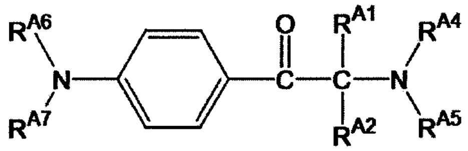

(AK-2)

In Formula AK-2, $R^{A4}$, $R^{A5}$, $R^{A6}$, and $R^{A7}$ each represent an alkyl group which may have a substituent, and either $R^{A4}$ and $R^{A5}$ or $R^{A6}$ and $R^{A7}$ may form a heterocyclic group by being bonded to each other. $R^{A1}$, $R^{A2}$, and the substituent have the same definition as $R^{A1}$, $R^{A2}$, and the substituent in Formula AK-1.

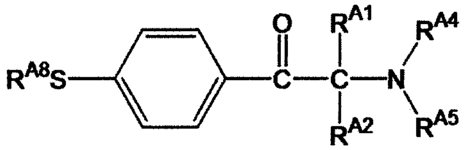

(AK-3)

In Formula AK-3, $R^{A8}$ represents an alkyl group having 1 to 10 carbon atoms that may have a substituent.

$R^{A1}$ and $R^{A2}$ have the same definition as $R^{A1}$ and $R^{A2}$ in Formula AK-1. $R^{A4}$ and $R^{A5}$ have the same definition as $R^{A4}$ and $R^{A5}$ in Formula AK-2.

In a case where $R^{A4}$ and $R^{A5}$ form a heterocyclic group by being bonded to each other, $R^{A4}$ and $R^{A5}$ can be appropriately selected without particular limitation. The heterocyclic group formed by the bonding between $R^{A4}$ and $R^{A5}$ is preferably, for example, a morpholino group.

Examples of the $\alpha$-aminoalkyl phenone compound suitably include 2-benzyl-2-dimethylamino-1-(4-morpholinophenyl)-butanone-1 (Irgacure 369, manufactured by BASF SE, light absorption coefficient: 7,858), 2-(dimethylamino)-2-[(4-methylphenyl)methyl]-1-[4-(4-morpholinyl)phenyl]-1-butanone (Irgacure 379EG, manufactured by BASF SE, light absorption coefficient: 7,858), 2-methyl-1-(4-methylthiophenyl)-2-morpholinopropan-1-one (Irgacure 907, manufactured by BASF SE, light absorption coefficient: 467), and the like.

It is preferable that the component A used in the composition for forming a polymer membrane of the present invention contains at least one of the compounds represented by the following Formulae A-1 to A-8. Among these, A-1 and A-5 are particularly preferable.

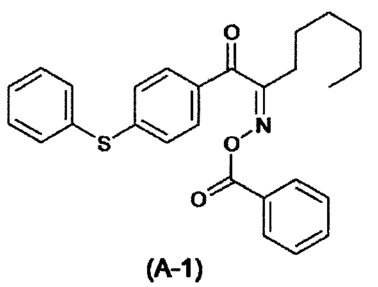

(A-1)

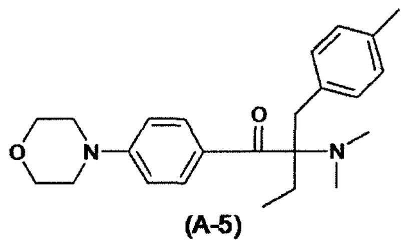

(A-5)

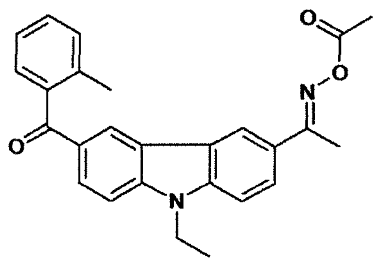

(A-2)

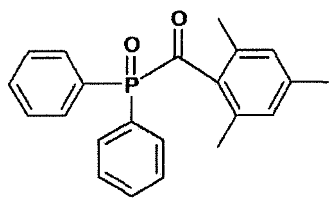

(A-6)

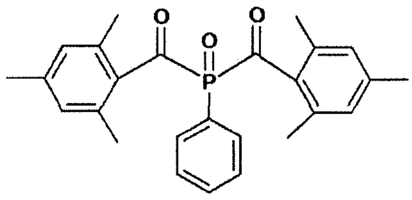

(A-3)

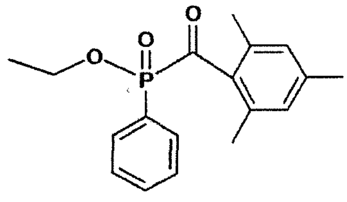

(A-7)

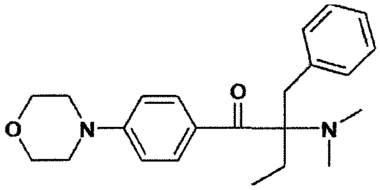

(A-4)

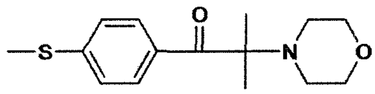

(A-8)

[Content of component A]

A content of the component A is, with respect to a total mass of the composition, preferably 0.2% to 3% by mass, more preferably 0.2% to 2.5% by mass, even more preferably 0.3% to 2% by mass, and particularly preferably 0.3% to 1% by mass.

Component B: polymerization initiator which is liquid at 25°C

The composition for forming a polymer membrane of the present invention contains, as a component B, a polymerization initiator which is a liquid at 25°C.
Being a liquid at 25°C means that a melting point of the component is equal to or less than 25°C.
In a case where the polymerization initiator coresponding to the component B also corresponds to the component A, the polymerization initiator is regarded as being the component A.
The component B may be a mixture obtained by mixing together a plurality of polymerization initiators which does not correspond to the component A. In a case where the aforementioned mixture has a melting point of equal to or less than 25°C, the mixture is regarded as corresponding to the component B.
The component B is preferably a photopolymerization initiator, and more preferably a photoradical polymerization initiator.
As the polymerization initiator which is a liquid at 25°C, commercially available polymerization initiators can be used, and examples thereof preferably include 2-hydroxy-2-methyl-1-phenyl-propan-1-one (Darocur 1173, manufactured by BASF SE, light absorption coefficient: 7.388) and a 1:1 mixture of 1-hydroxy-cyclohexyl-phenyl-ketone and benzophenone (Irgacure 500, manufactured by BASF SE, light absorption coefficient: 17.56).

[Content of component B]

A content of the component B is, with respect to a total mass of the composition, preferably 0.4% to 2.5% by mass, more preferably 0.4% to 2% by mass, and even more preferably 0.5% to 1% by mass.
A mass ratio between a content of the component A and a content of the component B (component A:component B) is preferably 15:85 to 85:15, more preferably 25:75 to 60:40, and even more preferably 40:60 to 55:45.

Component C: compound represented by Formula CL

The composition for forming a polymer membrane of the present invention contains a polymerizable compound represented by Formula CL.

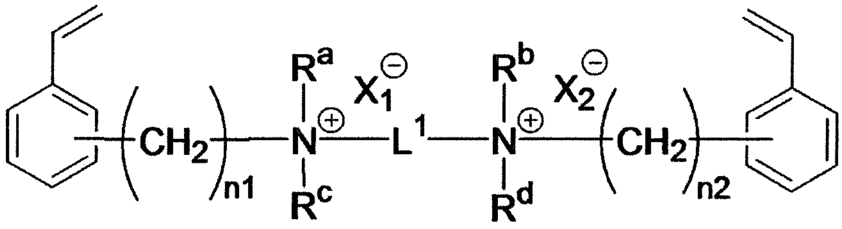

(CL)

In Formula CL, $L^1$ represents an alkylene group or an alkenylene group. $L^1$ is preferably an alkylene group, and more preferably a 1,2-ethylene group or a 2,2-dimethyl-1,3-propylene group.

The alkylene group and the alkenylene group may have a branch or a ring structure.

The number of carbon atoms of $L^1$ is preferably 2 to 10, more preferably 2 to 4, and even more preferably 2.

$R^a$, $R^b$, $R^c$, and $R^d$ each independently represent an alkyl group or an aryl group. It is preferable that $R^a$, $R^b$, $R^c$, and $R^d$ each represent an alkyl group, and $R^a$ and $R^b$, and/or $R^c$ and $R^d$ may form a ring by being bonded to each other. It is more preferable that $R^a$ and $R^b$ form a ring by being bonded to each other. Furthermore, it is more preferable that $R^c$ and $R^d$ form a ring by being bonded to each other. It is particularly preferable that $R^a$ and $R^b$ as well as $R^c$ and $R^d$ form a ring by being bonded to each other.

In a case where $R^a$ and $R^b$ and/or $R^c$ and $R^d$ form a ring by being bonded to each other, the group formed by the bonding between $R^a$ and $R^b$ and/or the bonding between $R^c$ and $R^d$ is preferably an alkylene group, more preferably an alkylene group having 2 to 4 carbon atoms, and even more preferably a 1,2-ethylene group.

The number of carbon atoms that $R^a$, $R^b$, $R^c$, and $R^d$ each independently have is preferably 1 to 20, more preferably 1 to 10, and even more preferably 1 to 4.

In a case where $R^a$, $R^b$, $R^c$, and $R^d$ do not form a ring by being bonded to each other, the alkyl group is preferably an alkyl group having 1 to 4 carbon atoms and more preferably a methyl group, and the aryl group is preferably an aryl group having 6 to 10 carbon atoms and more preferably a phenyl group.

The alkyl group may have a branch or a ring structure.

n1 and n2 each independently represent an integer of 1 to 10. n1 and n2 are preferably an integer of 1 to 4, more preferably 1 or 2, and even more preferably 1.

From the viewpoint of synthesis, n1 and n2 are preferably the same as each other.

$X_1^-$ and $X_2^-$ each independently represent an organic or inorganic anion. It is preferable that $X_1^-$ and $X_2^-$ each independently represent an inorganic anion. The organic or inorganic anion may be a monovalent anion or a multivalent anion. In a case where the organic or inorganic anion is a multivalent anion, the anion is present in an amount that is electrically equivalent to the amount of a cation of an ammonium group or the like in Formula CL. For example, $X_1^-$ and $X_2^-$ in Formula CL may represent a single divalent anion, or the divalent anion may be present with the two compounds represented by Formula CL as $X_1^-$and/or $X_2^-$.

Examples of the organic anion include an alkane or arene sulfonate ion and an alkyl or aryl carboxylate ion. Specific examples thereof include a methane sulfonate ion, a benzene sulfonate ion, a toluene sulfonate ion, and an acetate ion.

Examples of the inorganic anion include a halide ion, a sulfate ion, and a phosphate ion, and among these, a halide ion is preferable. The halide ion is preferably a chloride ion or a bromide ion, and particularly preferably a chloride ion.

The organic or inorganic anion is preferably an alkane or arene sulfonate ion, an alkyl or aryl carboxylate ion, a halide ion, or a sulfate ion, more preferably an alkane or arene sulfonate ion, a halide ion, or a sulfate ion, and even more preferably a halide ion.

$L^1$, $R^a$, $R^b$, $R^c$, and $R^d$ may have a substituent.

Examples of the substituent include an alkyl group, an aryl group, an alkenyl group, an alkynyl group, a hydroxyl group, an alkoxy group, an aryloxy group, an amino group, a halogen atom, an acyl group, an acyloxy group, a cyano group, and a nitro group.

The compound represented by Formula CL is preferably a compound represented by any of the following Formulae 1-1 to 1-6, more preferably a compound represented by any of the following Formulae 1-1 to 1-4 and 1-6, even more preferably a compound represented by the following Formula 1-1 or 1-6, and particularly preferably a compound represented by the following Formula 1-1.

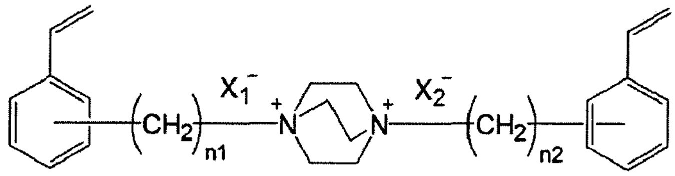

(1-1)

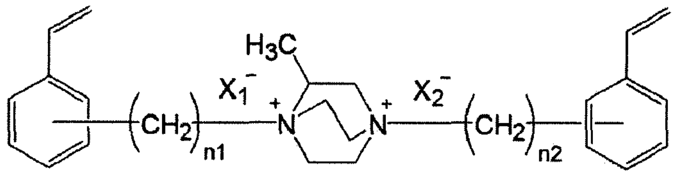

(1-2)

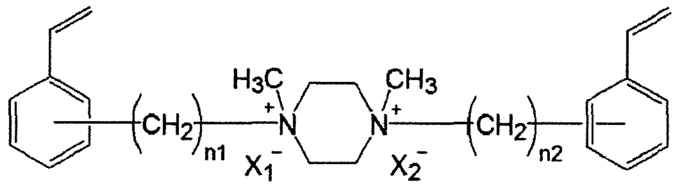

(1-3)

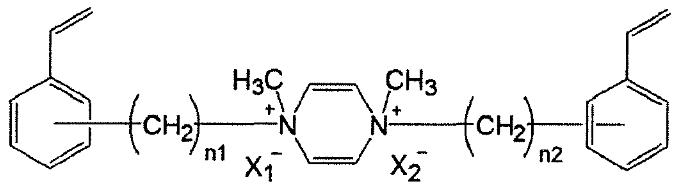

(1-4)

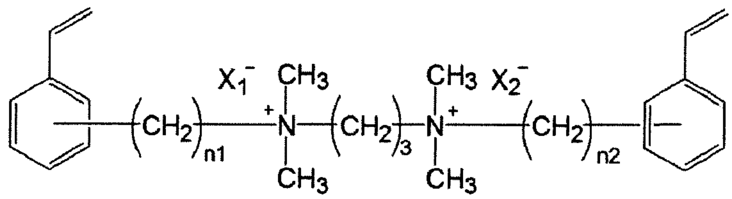

(1-5)

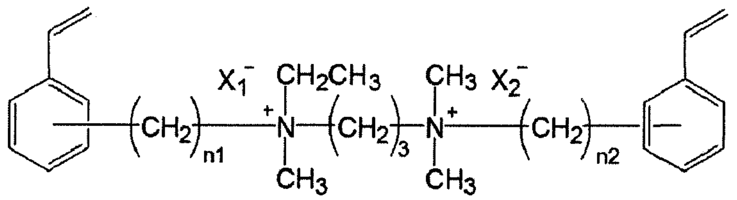

(1-6)

n1, n2, $X_1^-$, and $X_2^-$ in Formulae 1-1 to 1-6 have the same definition as n1, n2, $X_1^-$, and $X_2^-$ in Formula CL, and preferred aspects thereof are also the same.

[Content of component C]

The composition for forming a polymer membrane of the present invention may contain only one kind of polymerizable compound represented by Formula CL or contain two or more kinds thereof.

A content of the polymerizable compound represented by Formula CL is, with respsect to a mass of total solid contents of the composition, preferably 10% to 98% by mass, more preferably 30% to 95% by mass, and even more preferably 40% to 85% by mass. If the content is within the above range, a physical strength of the formed film is further improved, and the performance of the film is further improved.

A mass ratio between a content of the component A and a content of the component C (component A:component C) is preferably 1:99 to 7:93, more preferably 1:99 to 5:95, and even more preferably 1:99 to 3:97.

<Polymerizable compound represented by Formula SM>

The composition for forming a polymer membrane of the present invention preferably contains a polymerizable compound represented by Formula SM.

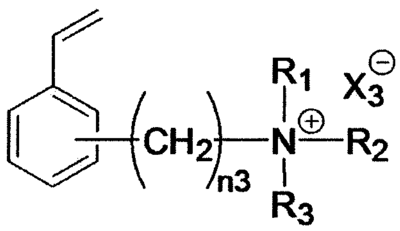

(SM)

In Formula SM, $R^1$, $R^2$, and $R^3$ each independently represent a linear or branched alkyl group or an aryl group. $R^1$ and $R^2$, or $R^1$, $R^2$, and $R^3$ may form an aliphatic heterocycle by being bonded to each other. n3 represents an integer of 1 to 10, and $X_3^-$ represents an organic or inorganic anion.

$R^1$, $R^2$, $R^3$, n3, and $X_3^-$ in Formula SM have the same definition as $R^a$, $R^b$, $R^c$, $R^d$, n1, and $X_1^-$ in Formula CL respectively, and preferred aspects thereof are also the same.

The compound represented by Formula SM is preferably a compound represented by any one of the following Formulae sm-1 to sm-7, and more preferably a compound represented by sm-1.

n3 and $X_3^-$ in Formulae sm-1 to sm-7 have the same definition as n3 and $X_3^-$ in Formula SM, and preferrd aspects thereof are also the same.

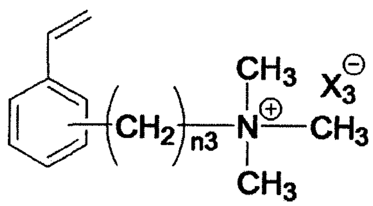

(sm-1)

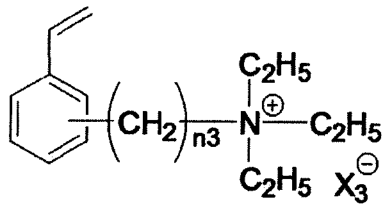

(sm-2)

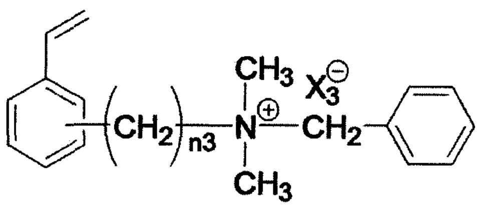

(sm-3)

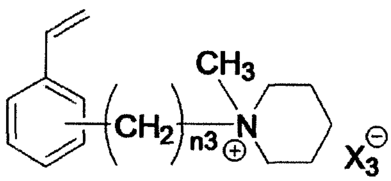

(sm-4)

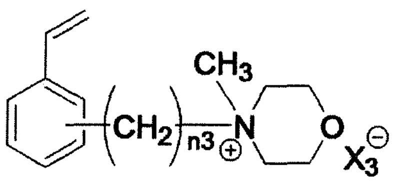

(sm-5)

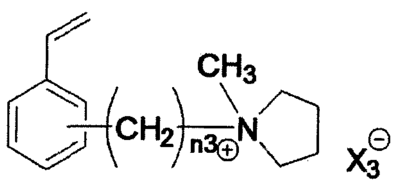

(sm-6)

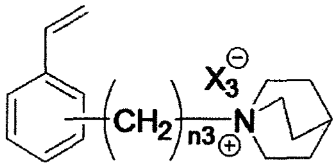

(sm-7)

The composition for forming a polymer membrane of the present invention may contain only one kind of polymerizable compound represented by Formula SM or contain two or more kinds thereof.
A content of the polymerizable compound represented by Formula SM is, with respect to a mass of total solid contents of the composition, preferably 1% to 80% by mass, more preferably 5% to 70% by mass, and even more preferably 10% to 40% by mass. If the content is within the above range, a physical strength of the formed film is further improved, and the performance of the film is further improved.

<Other polymerizable compounds>

The composition for forming a polymer membrane of the present invention may contain other polymerizable compounds different from the polymerizable compound represented by Formula CL or SM. A content of other polymerizable compounds is, with respect to a total mass of the composition for forming a polymer membrane of the present invention, preferably less than 50% by mass, more preferably less than 20% by mass, even more preferably less than 10% by mass, and particularly preferably less than 5% by mass.
Examples of other polymerizable compounds that the composition for forming a polymer membrane may have include a styrene compound other than those described above, a (meth)acrylate compound, and a vinyl ether compound.

<Solvent>

The composition for forming a polymer membrane of the present invention preferably further contains a solvent as a component D.
The solvent preferably contains at least water, and more preferably contains water and a water-soluble organic solvent.
As the water-soluble organic solvent, an organic solvent that exhibits a solubility of equal to or greater than 5% by mass in water is preferably used. As the water-soluble organic solvent, an organic solvent that is readily mixed with water is preferable.
As the water-soluble organic solvent, a water-soluble alcohol, an ether-based solvent which is an aprotic polar solvent, an amide-based solvent, a ketone-based solvent, a sulfoxide-based solvent, a sulfone-based solvent, a nitrile-based solvent, and an organic phosphorus-based solvent are particularly preferable.
Examples of the water-soluble alcohol include methanol, ethanol, isopropanol, n-butanol, ethylene glycol, propylene glycol, diethylene glycol, dipropylene glycol, and the like. Among the water-soluble alcohols, ethanol, isopropanol, n-butanol, and ethylene glycol are more preferable, and isopropanol is particularly preferable. One kind of these can be used singly, or two or more kinds thereof can be used in combination.
As the solvent used in the present invention, it is preferable to use water alone or use water and a water-soluble organic solvent in combination. It is more preferable to use water alone or to use water and at least one water-soluble alcohol in combination. It is even more preferable to use water and isopropanol in combination. In a case where water and a water-soluble organic solvent are used in combination, a proportion of the water-soluble organic solvent with respect 100% by mass of water is preferably 1% to 80%, more preferably 5% to 70%, and even more preferably 20% to 60%.
As the aprotic polar solvent, dimethyl sulfoxide, dimethyl imidazolidinone, sulfolane, N-methylpyrrolidone, dimethylformamide, acetonitrile, acetone, dioxane, tetramethylurea, hexamethylphosphorotriamide, pyridine, propionitrile, butanone, cyclohexanone, tetrahydrofuran, tetrahydropyran, ethylene glycol diacetate, γ-butyrolactone, and the like are exemplified as preferred solvents. Among these, dimethyl sulfoxide, N-methylpyrrolidone, dimethylformamide, dimethyl imidazolidinone, sulfolane, acetone, acetonitrile, or tetrahydrofuran is preferable. One kind of these can be used singly, or two or more kinds thereof can be used in combination.
A content of the solvent in the composition is, with respect to a total mass of the composition, preferably 5% to 35% by mass, more preferably 10% to 35% by mass, and even more preferably 15% to 30% by mass.
That is, the composition of the present invention is preferably a solution.
If the composition contains a solvent, a polymerization and curing reaction proceeds uniformly and smoothly, and impregnation smoothly proceeds in a case where a porous support, which will be described later, is impregnated

with the composition.

A content of water in the composition for forming a polymer membrane of the present invention is preferably 10% to 40% by mass with respect to a total mass of the composition.

It is preferable that the content of water is within the above range, because then each component in the composition dissolves thoroughly, and a composition having excellent coating properties is obtained.

<Polymerization inhibitor>

The composition for forming a polymer membrane of the present invention preferably contains a polymerization inhibitor so as to impart stability to a coating solution used at the time of forming a membrane.

As the polymerization inhibitor, a known polymerization inhibitor can be used, and examples thereof include a phenol compound, a hydroquinone compound, an amine compound, a mercapto compound, a free radical derivative, and the like.

Examples of the phenol compound include hindered phenol (phenol having a t-butyl group in an ortho position, typical examples thereof include 2,6-di-t-butyl-4-methyl phenol) and bisphenol. Specific examples of the hydroquinone compound include monomethyl ether hydroquinone. Specific examples of the amine compound include N-nitroso-N-phenylhydroxylamine, N,N-diethylhydroxylamine, and the like. Specific examples of the free radical derivative include 4-hydroxy-2,2,6,6,-tetramethylpiperidinyloxyl and 2,2,6,6-tetramethylpiperidine 1-1-oxyl. One kind of these polymerization inhibitors may be used singly, or two or more kinds thereof may be used in combination.

A content of the polymerization inhibitor is, with respect to a total mass of the composition that is 100 parts by mass, preferably 0.0001 to 5 parts by mass, more preferably 0.001 to 1 part by mass, and even more preferably 0.01 to 0.5 parts by mass.

<Other components>

The composition for forming a polymer membrane of the present invention may further contain a surfactant, a polymer dispersant, an anti-cratering agent, and the like.

[Surfactant]

For adjusting physical properties of the membrane, various polymer compounds can be added to the composition for forming a polymer membrane of the present invention. As the polymer compounds, it is possible to use an acrylic polymer, a polyurethane resin, a polyamide resin, a polyester resin, an epoxy resin, a phenol resin, a polycarbonate resin, a polyvinyl butyral resin, a polyvinyl formal resin, shellac, a vinyl-based resin, an acrylic resin, a rubber-based resin, waxes, other natural resins, and the like. Two or more kinds of these may be used in combination.

Furthermore, for adjusting physical properties of the coating solution as the composition for forming a polymer membrane, a nonionic surfactant, a cationic surfactant, an organic fluoro compound, and the like can also be added.

Specific examples of the surfactant include an anionic surfactant such as alkylbenzene sulfonate, alkylnaphthalene sulfonate, a higher fatty acid salt, sulfonate of a higher fatty acid ester, a sulfuric acid ester salt of higher alcohol ether, sulfonate of higher alcohol ether, alkyl carboxylate of higher alkyl sulfonamide, or alkyl phosphate, a nonionic surfactant such as polyoxyethylene alkyl ether, polyoxyethylene alkyl phenyl ether, polyoxyethylene fatty acid ester, sorbitan fatty acid ester, an ethylene oxide adduct of acetylene glycol, ethylene oxide adduct of glycerine, or polyoxyethylene sorbitan fatty acid ester, an amphoteric surfactant such as alkyl betaine or amide betaine, a silicon-based surfactant, a fluorine-based surfactant, and the like. The surfactant can be appropriately selected from these, surfactants known in the related art, and derivatives thereof.

[Polymer dispersant]

The composition for forming a polymer membrane of the present invention may contain a polymer dispersant.

Specific examples of the polymer dispersant include polyvinyl pyrrolidone, polyvinyl alcohol, polyvinyl methyl ether, polyethylene oxide, polyethylene glycol, polypropylene glycol, polyacrylamide, and the like. Among these, polyvinyl pyrrolidone is preferably used.

[Anti-cratering agent]

The anti-cratering agent is also referred to as a surface conditioner, a leveling agent, or a slip agent and is used for preventing irregularities on the membrane surface. Examples thereof include compounds having a structure of organic modified polysiloxane (mixture of polyether siloxane and polyether), a polyether modified polysiloxane copolymer,

or a silicon modified copolymer.

Examples of commercially available anti-cratering agents include Tego Glide 432, Tego Glide 110, Tego Glide 130, Tego Glide 406, Tego Glide 410, Tego Glide 411, Tego Glide 415, Tego Glide 420, Tego Glide 435, Tego Glide 440, Tego Glide 450, Tego Glide 482, Tego Glide A115, Tego Glide B1484, and Tego Glide ZG400 (all of these are trade names) manufactured by Evonik Industries.

An amount of the anti-cratering agent is, with respect to a mass of total solid contents of the composition for forming a polymer membrane that is 100 parts by mass, preferably 0 to 10 parts by mass, more preferably 0 to 5 parts by mass, and even more preferably 1 to 2 parts by mass.

If necessary, the composition for forming a polymer membrane of the present invention may contain, for example, a viscosity enhancer and a preservative, in addition to the above components.

(Method for producing composition for forming polymer membrane)

A method for producing a composition for forming a polymer membrane of the present invention includes a first dissolution step of dissolving a polymerization initiator as a component A, which has a light absorption coefficient of equal to or greater than $3 \times 10^2$ mL·g$^{-1}$·cm$^{-1}$ with respect to light having a wavelength of 365 nm, in a polymerization initiator as a component B which is a liquid at 25°C to prepare a mixed solution of initiators, a second dissolution step of dissolving a polymerizable compound as a component C represented by Formula CL in a mixed solvent obtained by mixing together two or more of solvent to prepare a monomer solution, and a third dissolution step of mixing together the mixed solution of initiators and the monomer solution.

<First dissolution step>

The method for producing a composition for forming a polymer membrane of the present invention includes a first dissolution step of dissolving a polymerization initiator as a component A, which has a light absorption coefficient of equal to or greater than $3 \times 10^2$ mL·g$^{-1}$·cm$^{-1}$ with respect to light having a wavelength of 365 nm, in a polymerization initiator as a component B which is a liquid at 25°C such that a mixed solution of initiators is prepared.

The components A and B used in the first dissolution step have the same definition as the components A and B used in the composition for forming a polymer membrane of the present invention, and a preferred range thereof is also the same.

A temperature at the time of mixing is not particularly limited as long as it is equal to or higher than a melting point of the component B, but is preferably 20°C to 100°C.

The mixing method and the like are not particularly limited, and known methods can be used.

<Second dissolution step>

The method for producing a composition for forming a polymer membrane of the present invention includes a second dissolution step of dissolving a polymerizable compound as a component C represented by Formula CL in a mixed solvent obtained by mixing together two or more kinds of solvent such that a monomer solution is prepared.

The liquid, which is obtained by mixing together two or more kinds of solvent, used in the second dissolution step refers to a liquid obtained by mixing together two or more kinds of solvent used in the composition for forming a polymer membrane of the present invention.

It is preferable that the mixed solvent contains at least water. The mixed solvent is preferably a solvent obtained by mixing water with a water-soluble organic solvent, more preferably a solvent obtained by mixing a water-soluble alcohol with water, and even more preferably a solvent obtained by mixing a water-soluble alcohol having 1 to 3 carbon atoms with water.

A content of the water-soluble organic solvent with respect to a total mass of the mixed solvent is preferably 20% to 40% by mass. That is, in a case where a water-soluble alcohol is used as a water-soluble organic solvent, a content of the water-soluble alcohol is preferably 20% to 40% by mass with respect to a total mass of the mixed solvent.

The component C used in the second dissolution step has the same definition as the component C used in the composition for forming a polymer membrane of the present invention, and a preferred range is also the same.

A content of the component C with respect to a mass of total solid contents of the monomer solution is preferably 10% to 98% by mass, more preferably 20% to 85% by mass, and even more preferably 30% to 70% by mass.

<Third dissolution step>

The method for producing a composition for forming a polymer membrane of the present invention includes the third dissolution step of mixing and dissolving together the mixed solution of initiators and the monomer solution.

(Polymer membrane)

A polymer membrane of the present invention is obtained by polymerizing the composition for forming a polymer membrane of the present invention or polymerizing a composition for forming a polymer membrane produced by the method for producing a composition for forming a polymer membrane of the present invention.

The polymerization is preferably performed by heating and/or irradiation of an energy ray (referred to as "actinic radiation" as well), and more preferably performed by the irradiation of an energy ray.

A preferred actinic radiation irradiation method and a preferred heating method will be described later.

The polymer membrane of the present invention can be used for ion exchange, a fuel cell, selective ion permeation, proton conduction, and removal of a protein aggregate or a virus. Hereinafter, preferred embodiments of the present invention will be explained by describing a case where the polymer membrane functions as an ion-exchange membrane.

The polymer membrane of the present invention has an anionic functional group and can be used as an electrolyte membrane (ion-exchange membrane). The polymer membrane of the present invention can perform the exchange of $Na^+$ as a cation in water containing a salt such as NaCl.

In the present invention, particularly because the composition of the present invention contains the components A to C, UV curability is imparted to the composition. Accordingly, a polymer membrane is obtained within a short period of time, and an electrolyte membrane can be prepared at low costs with excellent productivity.

An ideal ion-exchange membrane has a low membrane resistance, a low water permeability, and a high degree of permselectivity (selectivity in exchanging and separating caton/anion). Generally, the higher the charge density per molecular weight of a unit structure, the lower the membrane resistance, and the higher the permselectivity. Furthermore, the higher the cross-link density, the further the water permeability can be reduced.

<Support>

The polymer membrane of the present invention preferably contains a support, and more preferably contains a porous support.

In order to improve a mechanical strength of the membrane, various techniques can be used. For example, a support can be used as a reinforcing material of the membrane, and a porous support can be preferably used. By being coated or impregnated with the aforementioned composition for forming a polymer membrane and then subjected to a polymerization and curing reaction, the porous support can constitute a portion of the membrane.

Examples of the porous support include woven cloth, non-woven cloth, a sponge-like film, a film having fine through holes, and the like. The materials forming the support can be polyolefin (polyethylene, polypropylene, or the like), polyacrylonitrile, polyvinyl chloride, polyester, polyamide, and a copolymer of these or can be polysulfone, polyether sulfone, polyphenylene sulfone, polyphenylene sulfide, polyimide, polyethermide, polyamide, polyamide imide, polyacrylonitrile, polycarbonate, polyacrylate, cellulose acetate, polypropylene, poly(4-methyl-1-pentene), polyvinylidene fluoride, polytetrafluoroethylene, polyhexafluoropropylene, polychlorotrifluoroethylene, and a porous membrane based on a copolymer of these. Among these, in the present invention, polyolefin is preferable.

As commercially available porous supports and reinforcing materials, those marketed by Japan Vilene Company, Ltd, Freudenberg & Co. KG, Filtration Technologies, LLC (Novate xx material), and Sefar AG are exemplified.

In a case where a photopolymerization and curing reaction is performed, the porous support and the reinforcing material need not to block a wavelength region of the irradiation light, that is, the porous support and the reinforcing material need to pass the light having a wavelength used for the photopolymerization and curing. By irradiating the support from both surfaces thereof including a front and rear surfaces, even if light cannot be sufficiently passed through the support, the support can be used in the polymer membrane of the present invention.

It is preferable that the support is hydrophilic. As a technique for making the support hydrophilic, it is possible to use general treatment methods such as a corona treatment, an ozone treatment, a sulfuric acid treatment, and a silane coupling agent treatment.

A thickness of the support is preferably 10 to 500 $\mu$m, more preferably 20 to 400 $\mu$m, even more preferably 50 to 300 $\mu$m, and particularly preferably 80 to 300 $\mu$m.

(Method for producing polymer membrane)

It is preferable that the polymer membrane of the present invention is formed by coating the aforementioned support with the composition for forming a polymer membrane containing at least the components A to C, and irradiating the coated support with actinic radiation such that a cross-linking reaction occurs.

As an example of the method for producing a polymer membrane of the present invention, a method is exemplified in which a support is coated with the composition for forming a polymer membrane of the present invention, and

the coated support is irradiated with actinic radiation such that a polymer membrane is formed.

The conditions for forming the polymer membrane of the present invention are not particularly limited. The temperature is preferably -30°C to 100°C, more preferably -10°C to 80°C, and particularly preferably 5°C to 60°C.

In the present invention, a gas such as air or oxygen may be allowed to exist at the time of forming the membrane. It is preferable that the membrane is formed in an inert gas atmosphere.

The polymer membrane of the present invention can be prepared by a batch process (batch method) using a fixed support. The polymer membrane may be prepared by a continuous process (continuous method) using a moving support. The support may be in the form of a roll that is continuously rewound. In a case of a continuous method, by loading a support on a belt that is being continuously moved, it is possible to continuously perform a step of continuously coating the support with a coating solution as a composition for forming a polymer membrane and a step of forming a membrane by polymerizing and curing the composition. Here, only one of the coating step and the membrane forming step may be continuously performed.

Until the polymerization and curing reaction is finished after the support is dipped into the composition for forming a polymer membrane, a temporary support may also be used in addition to the support (after the polymerization and curing reaction is finished, the membrane is peeled off from the temporary support).

For the temporary support, the permeation of a substance does not need to be considered, and for example, any material including a metal plate such as an aluminum plate can be used as long as the material can be fixed for forming a membrane.

The porous support can be coated with or dipped into the composition for forming a polymer membrane by various methods such as curtain coating, extrusion coating, air knife coating, slide coating, nip roll coating, forward roll coating, reverse roll coating, dip coating, kiss coating, rod bar coating, or spray coating. A plurality of layers can be simultaneously or continuously coated. For simultaneously coating multiple layers, curtain coating, slide coating, slot die coating, and extrusion coating are preferable.

In the continuous method, the polymer membrane is preferably continuously produced by a moving support using the composition for forming a polymer membrane, more preferably produced by the use of producing unit which includes a coating portion of the composition for forming a polymer membrane, an irradiation source for polymerizing and curing the composition for forming a polymer membrane, a membrane winding-up portion, and a unit for moving the support to the irradiation source and the membrane winding-up portion from the coating portion of the composition for forming a polymer membrane.

In the present invention, it is preferable that the polymer membrane of the present invention is prepared through steps of (i) coating and impregnating a support with a coating solution as the composition for forming a polymer membrane or performing at least one of coating or impregnating of the support with the coating solution, (ii) heating the composition for forming a polymer membrane and/or irradiating the composition with actinic radiation such that a polymerization and curing reaction occurs, and (iii) peeling off the membrane from the support as desired.

<Irradiation of actinic radiation>

In the aforementioned manufacturing unit, the coating portion of the composition for forming a polymer membrane can be placed in a position in the upstream of the irradiation source, and the irradiation source is placed in a position in the upstream of a composite membrane winding-up portion. In order for the composition to have fluidity sufficient for coating performed in a high-speed coating machine, a viscosity at 35°C of the composition for forming a polymer membrane is preferably less than 4,000 mPa·s, more preferably 1 to 1,000 mPa·s, and most preferably 1 to 500 mPa·s. In a case where a coating method such as slide bead coating is used, the viscosity at 35°C is preferably 1 to 100 mPa·s.

In a high-speed coating machine, coating of the moving support with the composition for forming a polymer membrane can be performed at a rate of higher than 15 m/sec and at up to a rate of higher than 400 m/min.

Particularly, in a case where the support is used for improving the mechanical strength of the membrane, before the surface of the support is coated with the composition for forming a polymer membrane, for example, in order to improve wettability and adhesion of the support, the support may be subjected to a corona discharge treatment, a glow discharge treatment, a flame treatment, an ultraviolet irradiation treatment, and the like.

During the polymerization and curing reaction, the polymerizable compounds such as the components A and B are polymerized, and hence a polymer is formed. It is preferable that the polymerization and curing reaction is performed by light irradiation under the conditions in which the polymerization and curing occur with rapidity sufficient for forming a membrane within 30 seconds.

The polymerization and curing reaction of the composition for forming a polymer membrane is preferably initiated within 60 seconds, more preferably within 15 seconds, particularly preferably within 5 seconds, and most preferably within 3 seconds, after the support is coated with the composition for forming a polymer membrane.

During the polymerization and curing reaction, the composition for forming a polymer membrane is irradiated

with light preferably for less than 2 minutes, more preferably for less than 1 minute, and particularly preferably for less than 30 seconds. In the continuous method, by the speed at which the composition for forming a polymer membrane continuously irradiated with light passes through the irradiation beam and moves, the time of the polymerization and curing reaction is determined.

In a case where high-intensity ultraviolet rays (UV light) is used in the polymerization and curing reaction, a significant amount of heat is likely to be generated. Therefore, in order to prevent overheating, a lamp as a light source and the support coated with the composition for forming a polymer membrane or at least one of the lamp as a light source and the support coated with the composition for forming a polymer membrane is preferably cooled using cooling air. In a case where infrared light (IR light) at a significant dose is radiated together with UV beams, it is preferable to radiate UV light by using an IR reflective quartz plate as a filter.

The actinic radiation is preferably ultraviolet rays. It is preferable that the irradiation wavelength is matched with an absorption wavelength of any photopolymerization initiator contained in the composition for forming a polymer membrane. For example, the irradiation wavelength is 400 to 320 nm for UV-A, 320 to 280 nm for UV-B, and 280 to 200 nm for UV-C.

The source of ultraviolet rays include a mercury arc lamp, a carbon arc lamp, a low-pressure mercury lamp, a medium-pressure mercury lamp, a high-pressure mercury lamp, a swirl-flow plasma arc lamp, a metal halide lamp, a xenon lamp, a tungsten lamp, a halogen lamp, a laser, and an ultraviolet light-emitting diode. As the source of ultraviolet rays, a medium-pressure or high-pressure mercury vapor type ultraviolet light-emitting diode is particularly preferable. In addition, in order to change an emission spectrum of the lamp, an additive such as a metal halide may be present. In many cases, a lamp having emission maximum at 200 to 450 nm is particularly suitable.

An energy output of the irradiation source of the actinic radiation is preferably 20 to 1,000 W/$cm^2$, and more preferably 50 to 300 W/$cm^2$. However, the energy output may be higher or lower than the above as long as a desired exposure dose is established. By changing an exposure intensity, a curing degree of the membrane can be adjusted. The exposure dose, which is measured in a range of UV-B described above regarding the aforementioned device by using High Energy UV Radiometer (UV Power PuckTM manufactured by EIT-Instrument Markets, Inc.), is preferably at least equal to or greater than 200 mJ/$cm^2$, more preferably 1,000 to 10,000 mJ/$cm^2$, and even more preferably 1,000 to 5,000 mJ/$cm^2$. The exposure time can be freely selected, but is preferably short and most preferably less than 20 seconds.

In a case where the coating rate is high, in order to obtain a necessary exposure dose, a plurality of light sources may be used. In this case, the exposure intensities of the plurality of light sources may be the same as or different from each other.

<Heating>

The polymer membrane of the present invention can also be manufactured by heating the composition for forming a polymer membrane, and in addition to the aforementioned actinic radiation irradiation, a step of heating the composition may be added.

The heating method is not particularly limited, and known methods can be used. For example, a hot plate, an oven, an infrared heater, and the like can be used.

In a case where both of the actinic radiation irradiation and the heating are performed, the heating may be performed before the actinic radiation irradiation (pre-baking) or after the actinic radiation irradiation (post-baking), but it is preferable to perform post-baking.

A temperature of the pre-baking is preferably 70°C to 130°C, and more preferably 80°C to 120°C.

A heating time of the pre-baking is preferably about 10 to 300 seconds, and more preferably about 30 to 200 seconds.

A temperature of the post-baking is preferably 50°C to 200°C, more preferably 50°C to 150°C, and particularly preferably 50°C to 100°C.

In a case where a hot plate is used, a heating time of the post-baking is preferably about 1 minute to 30 minutes. In a case where other heating methods are used, the heating time is preferably about 20 minutes to 120 minutes. If the temperature is within the above range, the composition can be heated while preventing damage of the substrate and the device.

<Separation membrane module·ion exchange device>

The polymer membrane of the present invention is preferably made into a composite membrane combined with a porous support. Furthermore, the polymer membrane is preferably made into a separation membrane module using the polymer membrane. In addition, by the use of the polymer membrane, the composite membrane, or the polymer membrane module of the present invention, it is possible to prepare an ion exchange device having means for ion

exchange, deionization, or purification. The polymer membrane can also be suitably used as a fuel cell.

The polymer membrane of the present invention can be suitably used by being made into a module. Examples of the module include a spiral type, a hollow fiber type, a pleats type, a tubular type, a plate-and-frame type, a stack type, and the like.

The use of the polymer membrane of the present invention is mainly aimed at ion exchange in particular. However, the use of the polymer membrane of the present invention is not limited to ion exchange, and the polymer membrane is considered to be able to be suitably used as a proton conducting membrane for a fuel cell and for removing a protein and a virus.

Examples

Hereinafter, the present invention will be more specifically explained by describing examples. The materials and an amount and proportion thereof used, a treatment content, a treatment procedure, and the like shown in the following examples can be appropriately changed within a scope that does not depart from the gist of the present invention. Therefore, the scope of the present invention is not limited to the following specific examples. Herein, unless otherwise specified, "part" and "%" are based on mass.

(Preparation of anion-exchange membrane)

An aluminum plate was manually coated with each composition (composition for forming a polymer membrane) composed as shown in the following Tables 1 to 4 at a rate of about 5 m/min with a wire-wound rod, and then non-woven cloth was loaded on the aluminum plate and impregnated with the composition for forming a polymer membrane (coating solution). The surplus coating solution on the aluminum plate and the non-woven cloth was removed with a rod around which a wire was not wound. The temperature of the coating solution at the time of coating was about 25°C (room temperature). The aforementioned non-woven cloth (support) impregnated with the composition was subjected to exposure with a UV exposure machine (manufactured by Fusion UV Systems Inc, Light Hammer 10 model, D-bulb, conveyer speed: 1.0 to 9.5 m/min, 100% intensity) such that the composition was cured by a curing reaction, thereby preparing an anion-exchange membrane (hereinafter, simply referred to as a "membrane" as well). The exposure amount was 1,000 to 5,000 mJ/$cm^2$ in a UV-A region. In order to obtain a desired exposure amount·exposure time, the exposure was appropriately repeated. The time required for curing shown in Tables 1 to 4 is an integrated value of the exposure time. The obtained membrane was peeled off from the aluminum plate and stored for at least 12 hours in a 0.1 M NaCl solution.

In Example 24, after being coated with the coating solution, the support was pre-baked for 30 seconds at 80°C on a hot plate (manufactured by AS ONE Corporation, digital hot plate ND-1) before UV exposure.

In Example 25, after UV exposure, the support was post-baked for 10 minutes at 80°C on a hot plate (manufactured by AS ONE Corporation, digital hot plate ND-1).

(Evaluation)

<Time required for curing (exposure time)>

The time required for curing was determined as a curing time required for a quantity of a component, which was eluted when the prepared membrane was dipped into water, to become equal to or less than a detection limit in liquid chromatography.

<Electrical resistance of membrane ($\Omega \cdot cm^2$)>

Both surfaces of the membrane dipped into a 0.5 M aqueous NaCl solution for about 2 hours was wiped with dry filter paper, and the membrane was inserted into a double-chamber cell (effective membrane area: 1 $cm^2$, a Ag/AgCl reference electrode (manufactured by Metrohm AG) was used as an electrode). Both chambers of the double-chamber cell were filled with 100 mL of NaCl at the same concentration, and the double-chamber cell was left in a thermostatic water bath with a temperature of 25°C until equilibrium was established. After the temperature of the solution in the cell exactly became 25°C, an electrical resistance r1 was measured using an alternating current bridge (frequency: 1,000 Hz). The concentration of NaCl for measurement was set to be 0.5 M. Then, the membrane was removed such that the cell contains only the 0.5 M aqueous NaCl solution, an electrical resistance r2 between both of the electrodes was measured, and an electrical resistance r of the membrane was determined by r1 - r2. The smaller the value of the electrical resistance, the more the membrane is preferable as an ion-exchange membrane.

<Water permeability (mL/($m^2$·Pa·h))>

A water permeability of the membrane was measured using a device having a flow channel 10 shown in Fig. 1. In Fig. 1, the reference 1 represents a membrane, and the references 3 and 4 represent flow channels of a feed solution (pure water) and a draw solution (4 M NaCl) respectively. The arrow indicated by the reference 2 represents the flow of water separated from the feed solution.

400 mL of the feed solution and 400 mL of the draw solution were brought into contact with each other through the membrane (membrane contact area: 18 $cm^2$). Each of the solutions was caused to flow at a flow rate of 0.11 cm/sec with a peristaltic pump in a direction of the arrow indicated by the reference 5. The speed at which water in the feed solution passed into the draw solution through the membrane was analyzed by measuring a mass of the feed solution and the draw solution in real time, thereby determining a water permeability. The smaller the value of water permeability, the more the membrane is preferable as an anion-exchange membrane. The values shown in the tables are values multiplied by $10^5$. For example, the measurement value of Example 1 is $3.5 \times 10^{-5}$ (mL/($m^2$·Pa·hr)).

The smaller the value of the product of the electrical resistance and the water permeability, the higher the performance of the membrane as an anion-exchange membrane. The product of the value of the electrical resistance and the value of the water permeability (multiplied by $10^5$) was calculated.

<Hot water resistance>

The membrane was dipped for 24 hours into a bath containing water with a temperature of 50°C, and values of water permeability and electrical resistance were measured in the same manner as described above. A value obtained by 1 - (water permeability after dipping $\times$ value of electrical resistance)/(water permeability before dipping $\times$ value of electrical resistance) $\times$ 100 (%) was taken as a performance deterioration rate after dipping. If the performance deterioration rate after dipping was less than 10%, the hot water resistance was evaluated to be excellent, and the rate was equal to or greater than 10%, the hot water resistance was evaluated to be poor. In the tables, the mark of "-" means "unmeasurable".

[Table 1]

| Type of component | Compound name | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Monofunctional monomer | VBTMAC | 20.0 | 0.0 | 50.0 | 20.0 | 20.0 | 20.0 | 20.0 | 20.0 | 20.0 | 20.0 | 20.0 | 0.0 | 50.0 |
| Cross-linking agent (component C) | CL-1 | 49.0 | 69.0 | 19.0 | 49.0 | 49.0 | 48.5 | 48.5 | 49.0 | 49.0 | 49.0 | - | - | - |
| | CL-2 | - | - | - | - | - | - | - | - | - | - | 49.0 | 69.0 | 19.0 |
| Solvent (component D) | IPA | 10.0 | 10.0 | 10.0 | 10.0 | 10.0 | 10.0 | 10.0 | 10.0 | 10.0 | 10.0 | 10.0 | 10.0 | 10.0 |
| | Water | 20.0 | 20.0 | 20.0 | 20.0 | 20.0 | 20.0 | 20.0 | 20.0 | 20.0 | 20.0 | 20.0 | 20.0 | 20.0 |
| Polymerization inhibitor | 40H TEMPO | 0.03 | 0.03 | 0.03 | 0.03 | 0.03 | 0.03 | 0.03 | 0.03 | 0.03 | 0.03 | 0.03 | 0.03 | 0.03 |
| Polymer dispersant | Polyvinyl pyrrolidone | - | - | - | - | - | - | - | - | - | - | - | - | - |
| | Polyvinyl alcohol | - | - | - | - | - | - | - | - | - | - | - | - | - |
| Other polymerizable compounds | HEAA | - | - | - | - | - | - | - | - | - | - | - | - | - |
| | HEMA | - | - | - | - | - | - | - | - | - | - | - | - | - |
| | NK ESTER A-200 | - | - | - | - | - | - | - | - | - | - | - | - | - |
| Surfactant | TEGO AIREX 901W | - | - | - | - | - | - | - | - | - | - | - | - | - |
| | TEGO GLIDE 432 | - | - | - | - | - | - | - | - | - | - | - | - | - |
| | SURFLON S-231 | - | - | - | - | - | - | - | - | - | - | - | - | - |

(continued)

| Type of component | Compound name | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Photopolymerization initiator (component A) | IRGACURE OXE01 | 0.5 | 0.5 | 0.5 | 0.3 | - | - | - | - | 0.5 | - | 0.5 | 0.5 | 0.5 |
| | IRGACURE OXE02 | - | - | - | - | 0.5 | - | - | - | - | - | - | - | - |
| | IRGACURE 819 | - | - | - | - | - | 0.5 | - | - | - | - | - | - | - |
| | IRGACURE | - | - | - | - | - | - | 0.5 | - | - | - | - | - | - |
| | IRGACURE 379EG | - | - | - | - | - | - | - | 0.5 | - | 0.5 | - | - | - |
| | IRGACURE 907 | - | - | - | - | - | - | - | - | - | - | - | - | - |
| | LUCIRIN TPO | - | - | - | - | - | - | - | - | - | - | - | - | - |
| | LUCIRIN TPO-L | - | - | - | - | - | - | - | - | - | - | - | - | - |
| Photopolymerization initiator | DAROCUR 1173 | 0.5 | 0.5 | 0.5 | 0.7 | 0.5 | 1.0 | 1.0 | 0.5 | - | - | 0.5 | 0.5 | 0.5 |
| (component B) | IRGACURE 500 | - | - | - | - | - | - | - | - | 0.5 | 0.5 | - | - | - |
| Total | | 100.0 | 100.0 | 100.0 | 100.0 | 100.0 | 100.0 | 100.0 | 100.0 | 100.0 | 100.0 | 100.0 | 100.0 | 100.0 |
| Mass ratio between component A and component B (A:B) | | 50:50 | 50:50 | 50:50 | 30:70 | 50:50 | 33:67 | 33:67 | 50:50 | 50:50 | 50:50 | 50:50 | 50:50 | 50:50 |
| Mass ratio between component A and component C (A:C) | | 1:99 | 1:99 | 3:97 | 1:99 | 1:99 | 1:99 | 1:99 | 1:99 | 1:99 | 1:99 | 1:99 | 1:99 | 3:97 |
| Support | | 2223-10 | 2223-10 | 2223-10 | 2223-10 | 2223-10 | 2223-10 | 2223-10 | 2223-10 | 2223-10 | 2223-10 | 2223-10 | 2223-10 | 2223-10 |
| Thickness of support: μm | | 100 | 100 | 100 | 100 | 100 | 100 | 100 | 100 | 100 | 100 | 100 | 100 | 100 |
| Time required for curing (sec) | | 10 | 10 | 10 | 10 | 10 | 10 | 10 | 10 | 10 | 10 | 10 | 10 | 10 |
| Electrical resistance ($\Omega \cdot cm^2$) | | 1.5 | 2.8 | 0.7 | 1.4 | 1.5 | 1.6 | 1.7 | 1.5 | 1.6 | 17 | 1.8 | 2.7 | 0.9 |

(continued)

| Type of component | Compound name | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Water permeability $\times 10^{-5}$ (mL/(Pa·$m^2$·h)) | | 3.5 | 2.2 | 8.9 | 4.0 | 3.6 | 3.5 | 3.6 | 3.3 | 3.6 | 3.2 | 3.3 | 2.0 | 7.2 |
| Electrical resistance $\times$ water permeability | | 5.25 | 6.16 | 6.23 | 5.60 | 5.40 | 5.60 | 6.12 | 4.95 | 5.76 | 5.44 | 5.94 | 5.40 | 6.48 |
| Hot water resistance | | Excellent | Excellent | Excellent | Excellent | Excellent | Excellent | Excellent | Excellent | Excellent | Excellent | Excellent | Excellent | Excellent |

[Table 2]

| Type of component | Compound name | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|
| Monofunctional monomer | VBTMAC | 20.0 | 20.0 | 20.0 | 20.0 | 20.0 | 20.0 | 20.0 | 20.0 | 20.0 | 20.0 | 20.0 | 20.0 | 20.0 |
| Cross-linking agent (component C) | CL-1 | - | - | - | - | 49.0 | 49.0 | 49.0 | 49.0 | 49.0 | 49.0 | 48.0 | 46.0 | 49.0 |
| | CL-2 | 49.0 | 48.5 | 48.5 | 49.0 | - | - | - | - | - | - | - | - | - |
| Solvent (component D) | IPA | 10.0 | 10.0 | 10.0 | 10.0 | 10.0 | 10.0 | 10.0 | 10.0 | 10.0 | 10.0 | 10.0 | 10.0 | 10.0 |
| | Water | 20.0 | 20.0 | 20.0 | 20.0 | 20.0 | 20.0 | 20.0 | 20.0 | 20.0 | 20.0 | 20.0 | 20.0 | 20.0 |
| Polymerization inhibitor | 40H TEMPO | 0.03 | 0.03 | 0.03 | 0.03 | 0.03 | 0.03 | 0.03 | 0.03 | 0.03 | 0.03 | 0.03 | 0.03 | 0.03 |
| Polymer dispersant | Polyvinyl pyrrolidone | - | - | - | - | - | - | - | - | - | - | - | - | - |
| | Polyvinyl alcohol | - | - | - | - | - | - | - | - | - | - | - | - | - |
| Other polymerizable compounds | HEAA | - | - | - | - | - | - | - | - | - | - | - | - | - |
| | HEMA | - | - | - | - | - | - | - | - | - | - | - | - | - |
| | NK ESTER A-200 | - | - | - | - | - | - | - | - | - | - | - | - | - |
| Surfactant | TEGO AIREX 901 W | - | - | - | - | - | - | - | - | - | - | - | - | - |
| | TEGO GLIDE 432 | - | - | - | - | - | - | - | - | - | - | - | - | - |
| | SURFLON S-231 | - | - | - | - | - | - | - | - | - | - | - | - | - |

(continued)

| Type of component | Compound name | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|
| Photopolymerization initiator (component A) | IRGACURE OXE01 | - | - | - | - | - | - | - | 0.5 | 0.5 | 0.5 | 1.0 | 2.0 | 0.5 |
| | IRGACURE OXE02 | 0.5 | - | - | - | - | - | - | - | - | - | - | - | - |
| | IRGACURE 819 | - | 0.5 | - | - | - | - | - | - | - | - | - | - | - |
| | IRGACURE 369 | - | - | 0.5 | - | - | - | - | - | - | - | - | - | - |
| | IRGACURE 379EG | - | - | - | 0.5 | - | - | - | - | - | - | - | - | - |
| | IRGACURE 907 | - | - | - | - | 0.5 | - | - | - | - | - | - | - | - |
| | LUCIRIN TPO | - | - | - | - | - | 0.5 | - | - | - | - | - | - | - |
| | LUCIRIN TPO-L | - | - | - | - | - | - | 0.5 | - | - | - | - | - | - |
| Photopolymerization initiator (component B) | DAROCUR 1173 | 0.5 | 1.0 | 1.0 | 0.5 | 0.5 | 0.5 | 0.5 | 0.5 | 0.5 | 0.5 | 1.0 | 2.0 | 0.5 |
| | IRGACURE 500 | - | - | - | - | - | - | - | - | - | - | - | - | - |
| Total | | 100.0 | 100.0 | 100.0 | 100.0 | 100.0 | 100.0 | 100.0 | 100.0 | 100.0 | 100.0 | 100.0 | 100.0 | 100.0 |
| Mass ratio between component A and component B (A:B) | | 50:50 | 33:67 | 33:67 | 50:50 | 50:50 | 50:50 | 50:50 | 50:50 | 50:50 | 50:50 | 50:50 | 50:50 | 50:50 |
| Mass ratio between component A and component C (A:C) | | 1:99 | 1:99 | 1:99 | 1:99 | 1:99 | 1:99 | 1:99 | 1:99 | 1:99 | 1:99 | 2:98 | 4:96 | 1:99 |
| Support | | 2223-10 | 2223-10 | 2223-10 | 2223-10 | 2223-10 | 2223-10 | 2223-10 | 2226-14 | 05TH -24 | 05TH -36 | 2223-10 | 2223-10 | 2223-10 |
| Thickness of support: μm | | 100 | 100 | 100 | 100 | 100 | 100 | 100 | 150 | 50 | 70 | 100 | 100 | 100 |
| Time required for curing (sec) | | 10 | 10 | 10 | 10 | 10 | 10 | 10 | 10 | 10 | 10 | 8 | 6 | 6 |

(continued)

| Type of component | Compound name | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|
| Electrical resistance ($\Omega\cdot cm^2$) | | 1.7 | 1.8 | 1.9 | 1.9 | 1.5 | 1.6 | 1.8 | 3.5 | 0.7 | 1.0 | 1.8 | 1.9 | 1.8 |
| Water permeability $\times$ $10^{-5}$ (mL/($Pa\cdot m^2\cdot h$)) | | 3.2 | 3.0 | 3.2 | 2.9 | 3.8 | 3.4 | 3.2 | 1.7 | 9.0 | 62 | 3.5 | 3.2 | 3.2 |
| Electrical resistance $\times$ water permeability | | 5.44 | 5.40 | 6.08 | 5.51 | 5.70 | 5.44 | 5.76 | 5.95 | 6.30 | 6.20 | 6.30 | 6.08 | 5.76 |
| Hot water resistance | | Excellent | Excellent | Excellent | Excellent | Excellent | Excellent | Excellent | Excellent | Excellent | Excellent | Excellent | Excellent | Excellent |

[Table 3]

| Type of component | Compound name | Example 27 | Example 28 | Example 29 | Example 30 | Example 31 | Example 32 | Example 33 | Example 34 | Example 35 |
|---|---|---|---|---|---|---|---|---|---|---|
| Monofunctional monomer | VBTMAC | 20.0 | 20.0 | 20.0 | 20.0 | 20.0 | 20.0 | 20.0 | 20.0 | 20.0 |
| Cross-linking agent (component C) | CL-1 | 49.0 | 46.0 | 46.0 | 44.0 | 44.0 | 44.0 | 48.5 | 48.5 | 48.5 |
| | CL-2 | - | - | - | - | - | - | - | - | - |
| Solvent (component D) | IPA | 10.0 | 10.0 | 10.0 | 10.0 | 10.0 | 10.0 | 10.0 | 10.0 | 10.0 |
| | Water | 20.0 | 20.0 | 20.0 | 20.0 | 20.0 | 20.0 | 20.0 | 20.0 | 20.0 |
| Polymerization inhibitor | 40H TEMPO | 0.03 | 0.03 | 0.03 | 0.03 | 0.03 | 0.03 | 0.03 | 0.03 | 0.03 |
| Polymer dispersant | Polyvinyl pyrrolidone | - | 3.0 | - | - | - | - | - | - | - |
| | Polyvinyl alcohol | - | - | 3.0 | - | - | - | - | - | - |
| Other polymerizable compounds | HEAA | - | - | - | 5.0 | - | - | - | - | - |
| | HEMA | - | - | - | - | 5.0 | - | - | - | - |
| | NK ESTER A-200 | - | - | - | - | - | 5.0 | - | - | - |
| Surfactant | TEGO AIREX 901 W | - | - | - | - | - | - | 0.5 | - | - |
| | TEGO GLIDE 432 | - | - | - | - | - | - | - | 0.5 | - |
| | SURFLON S-231 | - | - | - | - | - | - | - | - | 0.5 |

(continued)

| Type of component | Compound name | Example 27 | Example 28 | Example 29 | Example 30 | Example 31 | Example 32 | Example 33 | Example 34 | Example 35 |
|---|---|---|---|---|---|---|---|---|---|---|
| Photopolymerization initiator (component A) | IRGACURE OXE01 | 0.5 | 0.5 | 0.5 | 0.5 | 0.5 | 0.5 | 0.5 | 0.5 | 0.5 |
| | IRGACURE OXE02 | - | - | - | - | - | - | - | - | - |
| | IRGACURE 819 | - | - | - | - | - | - | - | - | - |
| | IRGACURE 369 | - | - | - | - | - | - | - | - | - |
| | IRGACURE 379EG | - | - | - | - | - | - | - | - | - |
| | IRGACURE 907 | - | - | - | - | - | - | - | - | - |
| | LUCIRIN TPO | - | - | - | - | - | - | - | - | - |
| | LUCIRIN TPO-L | - | - | - | - | - | - | - | - | - |
| Photopolymerization initiator (component B) | DAROCUR 1173 | 0.5 | 0.5 | 0.5 | 0.5 | 0.5 | 0.5 | 0.5 | 0.5 | 0.5 |
| | IRGACURE 500 | - | - | - | - | - | - | - | - | - |
| Total | | 100.0 | 100.0 | 100.0 | 100.0 | 100.0 | 100.0 | 100.0 | 100.0 | 100.0 |
| Mass ratio between component A and component B (A:B) | | 50:50 | 50:50 | 50:50 | 50:50 | 50:50 | 50:50 | 50:50 | 50:50 | 50:50 |
| Mass ratio between component A and component C (A:C) | | 1:99 | 1:99 | 1:99 | 1:99 | 1:99 | 1:99 | 1:99 | 1:99 | 1:99 |
| Support | | 2223-10 | 2223-10 | 2223-10 | 2223-10 | 2223-10 | 2223-10 | 2223-10 | 2223-10 | 2223-10 |
| Thickness of support: μm | | 100 | 100 | 100 | 100 | 100 | 100 | 100 | 100 | 100 |
| Time required for curing (sec) | | 10 | 10 | 10 | 8 | 8 | 8 | 10 | 10 | 10 |

(continued)

| Type of component | Compound name | Example 27 | Example 28 | Example 29 | Example 30 | Example 31 | Example 32 | Example 33 | Example 34 | Example 35 |
|---|---|---|---|---|---|---|---|---|---|---|
| Electrical resistance ($\Omega \cdot cm^2$) | | 2.0 | 1.5 | 1.3 | 2.0 | 2.1 | 2.5 | 1.6 | 1.7 | 1.5 |
| Water permeability $\times 10^{-5}$ ($mL/(Pa \cdot m^2 \cdot h)$) | | 2.8 | 4.0 | 4.4 | 2.9 | 3.0 | 2.4 | 3.7 | 3.8 | 3.8 |
| Electrical resistance $\times$ water permeability | | 5.60 | 6.00 | 5.72 | 5.80 | 6.30 | 6.00 | 5.92 | 6.46 | 5.70 |
| Hot water resistance | | Excellent | Excellent | Excellent | Excellent | Excellent | Excellent | Excellent | Excellent | Excellent |

[Table 4]

| Type of component | Compound name | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Monofunctional monomer | VBTMAC | 20.0 | 20.0 | 69.0 | 20.0 | 20.0 | 20.0 | 20.0 | 20.0 | 20.0 | 20.0 | 20.0 | 20.0 |
| Cross-linking agent (component C) | CL-1 | 49.0 | - | - | 49.0 | 49.0 | - | - | 49.0 | 49.0 | 49.0 | 49.0 | 49.0 |
| | CL-2 | - | 49.0 | - | - | - | 49.0 | 49.0 | - | - | - | - | - |
| Solvent (component D) | IPA | 10.0 | 10.0 | 10.0 | 10.0 | 10.0 | 10.0 | 10.0 | 10.0 | 10.0 | 10.0 | 10.0 | 10.0 |
| | Water | 20.0 | 20.0 | 20.0 | 20.0 | 20.0 | 20.0 | 20.0 | 20.0 | 20.0 | 20.0 | 20.0 | 20.0 |
| Polymerization inhibitor | 40H TEMPO | 0.03 | 0.03 | 0.03 | 0.03 | 0.03 | 0.03 | 0.03 | 0.03 | 0.03 | 0.03 | 0.03 | 0.03 |
| Polymer dispersant | Polyvinyl pyrrolidone | - | - | - | - | - | - | - | - | - | - | - | - |
| | Polyvinyl alcohol | - | - | - | - | - | - | - | - | - | - | - | - |
| Other polymerizable compounds | HEAA | - | - | - | - | - | - | - | - | - | - | - | - |
| | HEMA | - | - | - | - | - | - | - | - | - | - | - | - |
| | NK ESTER A-200 | - | - | - | - | - | - | - | - | - | - | - | - |
| Surfactant | TEGO AIREX 901W | - | - | - | - | - | - | - | - | - | - | - | - |
| | TEGO GLIDE 432 | - | - | - | - | - | - | - | - | - | - | - | - |
| | SURFLON S-231 | - | - | - | - | - | - | - | - | - | - | - | - |

(continued)

| Type of component | Compound name | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Photopolymerization initiator (component A) | IRGACURE OXE01 | - | - | 0.5 | 0.9 | 0.1 | 0.9 | 0.1 | 1.0 | - | - | - | - |
| | IRGACURE OXE02 | - | - | - | - | - | - | - | - | 1.0 | - | - | - |
| | IRGACURE 819 | - | - | - | - | - | - | - | - | - | 1.0 | - | - |
| | IRGACURE 369 | - | - | - | - | - | - | - | - | - | - | 1.0 | - |
| | IRGACURE 379EG | - | - | - | - | - | - | - | - | - | - | - | 1.0 |
| | IRGACURE 907 | - | - | - | - | - | - | - | - | - | - | - | - |
| | LUCIRIN TPO | - | - | - | - | - | - | - | - | - | - | - | - |
| | LUCIRIN TPO-L | - | - | - | - | - | - | - | - | - | - | - | - |
| Photopolymerization initiator (component B) | DAROCUR 1173 | 1.0 | 1.0 | 0.5 | 0.1 | 0.9 | 0.1 | 0.9 | - | - | - | - | - |
| | IRGACURE 500 | - | - | - | - | - | - | - | - | - | - | - | - |
| Total | | 100.0 | 100.0 | 100.0 | 100.0 | 100.0 | 100.0 | 100.0 | 100.0 | 100.0 | 100.0 | 100.0 | 100.0 |
| Mass ratio between component A and component B (A:B) | | 0:100 | 50:50 | 50:50 | 90:10 | 10:90 | 90:10 | 10:90 | 100:0 | 100:0 | 100:0 | 100:0 | 100:0 |

(continued)

| Type of component | Compound name | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Mass ratio between component A and component C (A:C) | | 0:100 | 0:100 | 100:0 | 2:98 | 0:100 | 2:98 | 0:100 | 2:98 | 2:98 | 2:98 | 2:98 | 2:98 |
| Support | | 2223-10 | 2223-10 | 2223-10 | 2223-1 0 | 2223-10 | 2223-10 | 2223-10 | 2223-10 | 2223-10 | 2223-10 | 2223-10 | 2223-10 |
| Thickness of support: μm | | 100 | 100 | 100 | 100 | 100 | 100 | 100 | 100 | 100 | 100 | 100 | 100 |
| Time required for curing (sec) | | 200 | 200 | Failed to prepare membrane | Failed to prepare membrane | 100 | Failed to prepare membrane | 100 | Failed to prepare membrane | Failed to prepare membrane | Failed to prepare membrane | Failed to prepare membrane | Failed to prepare membrane |
| Electrical resistance ($\Omega \cdot cm^2$) | | 1.5 | 2.0 | - | - | 1.2 | - | 1.4 | - | - | - | - | - |
| Water permeability $\times 10^{-5}$ ($mL/(Pa \cdot m^2 \cdot h)$) | | 5.0 | 4.0 | - | - | 8.5 | - | 8.0 | - | - | - | - | - |
| Electrical resistance $\times$ water permeability | | 7.50 | 8.00 | - | - | 10.20 | - | 11.20 | - | - | - | - | - |
| Hot water resistance | | Poor | Poor | - | - | Poor | - | Poor | - | - | - | - | - |

The unit of the numerical values in the column of each component of the composition for forming a polymer membrane and the post-treatment solution in Tables 1 to 4 is part by mass. In the tables, the mark of "-" means that the composition does not contain the aforementioned component.

The details of the compounds used in examples and comparative examples are as below.

<Monofunctional monomer>

VBTMAC: vinylbenzyl trimethylammonium chloride (manufactured by AGC SEIMI CHEMICAL CO., LTD.)

<Cross-linking agent>

- CL-1: compound having the following structure
- CL-2: compound having the following structure

[Synthesis Example 1: synthesis of CL-1]

1,4-Diazabicyclo[2.2.2]octane (1.00 mol, manufactured by Wako Pure Chemical Industries, Ltd.) was added to a mixed solution of 321 g of chloromethylstyrene (2.10 mol, CMS-P manufactured by AGC SEIMI CHEMICAL CO., LTD.), 1.30 g of 2,6-di-t-butyl-4-methylphenol (manufactured by Wako Pure Chemical Industries, Ltd.), and 433 g of acetonitrile, and the mixed solution was heated and stirred for 15 hours at 80°C.

The generated crystals were filtered, thereby obtaining 405 g (yield: 97%) of white crystals of the following compound CL-1.

[Synthesis Example 2: synthesis of CL-2]

130 g of N,N,N',N'-tetramethyl-1,3-diaminopropane (1.00 mol, manufactured by TOKYO CHEMICAL INDUSTRY CO., LTD.) was added to a mixed solution of 458 g of chloromethylstyrene (3.00 mol, CMS-P manufactured by AGC SEIMI CHEMICAL CO., LTD.), 1.85 g of 2,6-di-t-butyl-4-methylphenol (manufactured by Wako Pure Chemical Industries, Ltd.), and 1,232 g of nitrobenzene, and the mixed solution was heated and stirred for 20 hours at 80°C. The generated crystals were filtered, thereby obtaining 218 g (yield: 50%) of white crystals of the following compound CL-2.

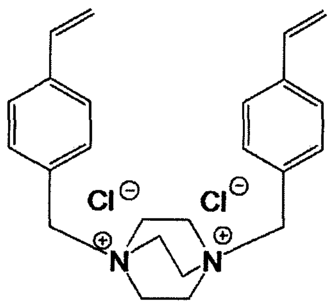

(CL-1)

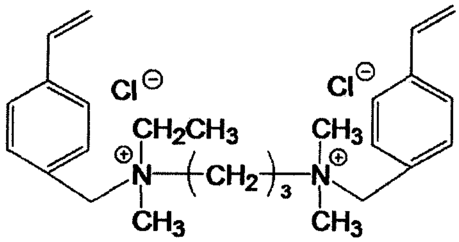

(CL-2)

<Solvent>

- IPA: isopropanol (manufactured by Wako Pure Chemical Industries, Ltd.)

- Water: pure water (manufactured by Wako Pure Chemical Industries, Ltd.)

<Polymerization inhibitor>

- 4OH TEMPO: 4-hydroxy-2,2,6,6-tetramethylpiperidine 1-oxyl (POLYSTOP 7300P, manufactured by Hakuto Co., Ltd.)

<Photopolymerization initiator (component A)>

- Irgacure OXE01: 1,2-octanedione,1-[4-(phenylthio)-,2-(O-benzoyloxime)] (manufactured by BASF SE, light absorption coefficient: 6,969)
- Irgacure OXE02: ethanone,1-[9-ethyl-6-(2-methylbenzoyl)-9H-carbazol-3-yl]-,1-(0-acetyloxime) (manufactured by BASF SE, light absorption coefficient: 7,749)
- Irgacure 819: bis(2,4,6-trimethylbenzoyl)phenylphosphine oxide (manufactured by BASF SE, light absorption coefficient: 2,309)
- Irgacure 369: 2-benzyl-2-dimethylamino-1-(4-morpholinophenyl)-butanone-1 (manufactured by BASF SE, light absorption coefficient: 7,858)
- Irgacure 379EG: 2-(dimethylamino)-2-[(4-methylphenyl)methyl]-1-[4-(4-morpholinyl)phenyl]-1-butanone (manufactured by BASF SE, light absorption coefficient: 7,858)
- Irgacure 907; 2-methyl-1-(4-methylthiophenyl)-2-morpholinopropan-1-one (manufactured by BASF SE, light absorption coefficient: 467)
- Lucirin TPO, DAROCUR TPO: 2,4,6-trimethylbenzoyldiphenylphosphine oxide (manufactured by BASF SE, light absorption coefficient: 472)
- Lucirin TPO-L: 2,4,6,-trimethylbenzoylphenylphosphate (manufactured by BASF SE, light absorption coefficient: 450)

<Photopolymerization initiator (component B)>

- Darocur 1173: 2-hydroxy-2-methyl-1-phenyl-propan-1-one (manufactured by BASF SE, light absorption coefficient: 7.388)
- Irgacure 500: 1:1 mixture of 1-hydroxy-cyclohexyl-phenyl-ketone and benzophenone (manufactured by BASF SE, light absorption coefficient: 17.56)

<Other additives>

- Polyvinyl pyrrolidone (K-90, manufactured by Fluka)
- Polyvinyl alcohol (PVA-102, manufactured by KURARAY CO., LTD.)
- HEAA: hydroxyethyl acrylamide (manufactured by TOKYO CHEMICAL INDUSTRY CO., LTD.)
- HEMA: 2-hydroxyethyl methacrylate (manufactured by TOKYO CHEMICAL INDUSTRY CO., LTD.)
- Polyethylene glycol (#200) diacrylate (NK ESTER A-200, manufactured by SHIN-NAKAMURA CHEMICAL CO., LTD.)
- Tego Airex 901W (manufactured by Evonik Industries)
- Tego Glide 432 (manufactured by Evonik Industries)
- SURFLON S-231 (manufactured by AGC SEIMI CHEMICAL CO., LTD.)

<Support>

- 2223-10: polypropylene non-woven cloth (manufactured by Freudenberg & Co. KG, FO-2223-10, thickness: 100 μm)

- 2226-14: polypropylene non-woven cloth (manufactured by Freudenberg & Co. KG, FO-2226-14, thickness: 150 μm)
- 05TH-24: polyester non-woven cloth (manufactured by HIROSE PAPER MFG CO.,LTD., 05TH-24, thickness: 50 μm)
- 05TH-36: polyester non-woven cloth (manufactured by HIROSE PAPER MFG CO.,LTD., 05TH-36, thickness: 70 μm)

Explanation of References

1: membrane
2: arrow showing a state where water in feed solution passing into draw solution through membrane
3: flow channel of feed solution
4: flow channel of draw solution
5: direction of movement of liquid
10: flow channel of water permeability measurement device

## Claims

1. A composition for forming a polymer membrane, comprising:

   a polymerization initiator, which has a light absorption coefficient of equal to or greater than $3 \times 10^2$ mL·g$^{-1}$·cm$^{-1}$ with respect to light having a wavelength of 365 nm, as a component A;
   a polymerization initiator which is a liquid at 25°C as a component B; and
   a polymerizable compound represented by Formula CL as a component C,
   wherein a mass ratio of component A:component B is 15:85 to 85:15,

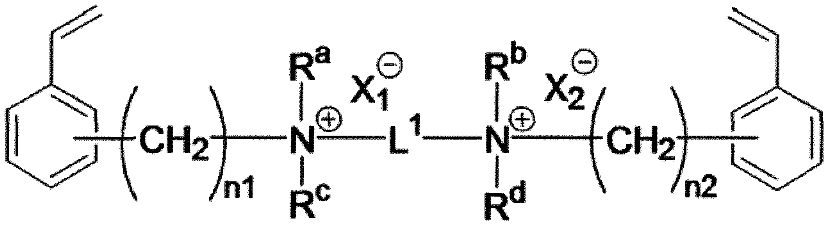

(CL)

   in Formula CL, $L^1$ represents an alkylene group or an alkenylene group, $R^a$, $R^b$, $R^c$, and $R^d$ each independently represent an alkyl group or an aryl group, $R^a$ and $R^b$, and/or $R^c$ and $R^d$ may form a ring by being bonded to each other, n1 and n2 each independently represent an integer of 1 to 10, and $X_1^-$ and $X_2^-$ each independently represent an organic or inorganic anion.

2. The composition for forming a polymer membrane according to claim 1,
   wherein a content of water is 10% to 40% by mass with respect to a total mass of the composition.

3. The composition for forming a polymer membrane according to claim 1 or 2,
   wherein the component A contains at least one of the compounds represented by Formulae A-1 to A-8,

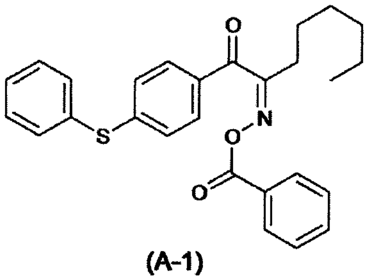

(A-1)

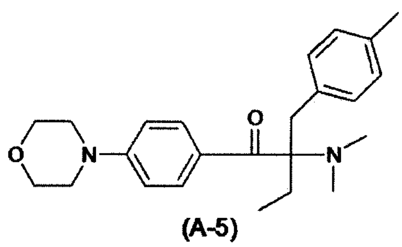

(A-5)

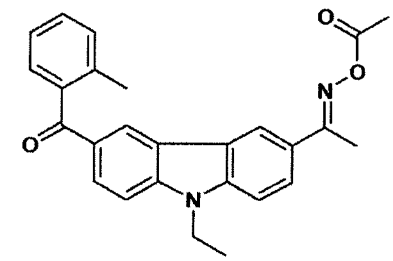

**(A-2)**

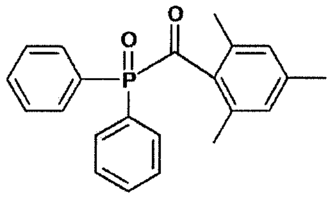

**(A-6)**

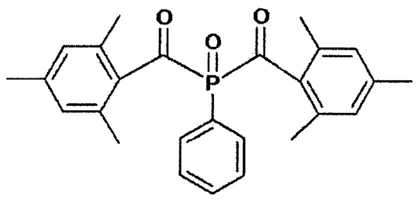

**(A-3)**

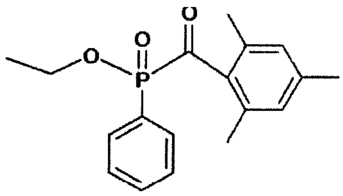

**(A-7)**

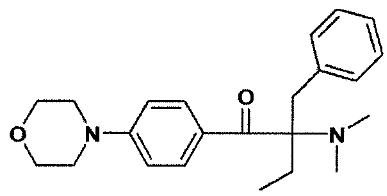

**(A-4)**

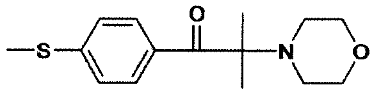

**(A-8)**

**4.** The composition for forming a polymer membrane according to any one of claims 1 to 3, further comprising:

a polymerizable compound represented by Formula SM,

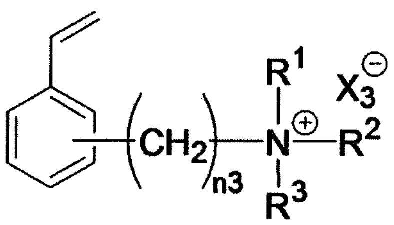

**(SM)**

in Formula SM, $R^1$, $R^2$, and $R^3$ each independently represent a linear or branched alkyl group or an aryl group, $R^1$ and $R^2$, or $R^1$, $R^2$, and $R^3$ may form an aliphatic heterocycle by being bonded to each other, n3 represents an integer of 1 to 10, and $X_3^-$ represents an organic or inorganic anion.

**5.** The composition for forming a polymer membrane according to claim 4, wherein a content of the polymerizable compound represented by Formula SM is 1% to 80% by mass with respect to a mass of total solid contents of the composition.

**6.** The composition for forming a polymer membrane according to any one of claims 1 to 5, wherein a content of the polymerizable compound represented by Formula CL is 10% to 98% by mass with respect to a mass of total solid contents of the composition.

**7.** The composition for forming a polymer membrane according to any one of claims 1 to 6,

wherein a content of the component A is 0.2% to 2.5% by mass with respect to a total mass of the composition.

**8.** The composition for forming a polymer membrane according to any one of claims 1 to 7, wherein a mass ratio between a content of the component A and a content of the component C (component A:component C) is 1:99 to 7:93.

**9.** The composition for forming a polymer membrane according to any one of claims 1 to 8, wherein a mass ratio between a content of the component A and a content of the component B (component A:component B) is 25:75 to 60:40.

**10.** The composition for forming a polymer membrane according to any one of claims 1 to 9, further comprising: a solvent as a component D.

**11.** The composition for forming a polymer membrane according to claim 10, wherein the component D contains water and a water-soluble organic solvent.

**12.** A method for producing a composition for forming a polymer membrane, comprising:

dissolving a polymerization initiator as a component A, which has a light absorption coefficient of equal to or greater than $3 \times 10^2$ mL·g$^{-1}$·cm$^{-1}$ with respect to light having a wavelength of 365 nm, in a polymerization initiator as a component B which is a liquid at 25°C to prepare a mixed solution of initiators;
dissolving a polymerizable compound as a component C represented by Formula CL in a mixed solvent obtained by mixing together two or more of solvent to prepare a monomer solution; and
mixing together the mixed solution of initiators and the monomer solution,

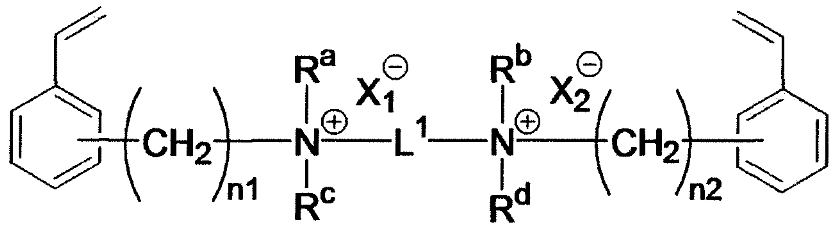

(CL)

in Formula CL, $L^1$ represents an alkylene group or an alkenylene group, $R^a$, $R^b$, $R^c$, and $R^d$ each independently represent an alkyl group or an aryl group, $R^a$ and $R^b$, and/or $R^c$ and $R^d$ may form a ring by being bonded to each other, n1 and n2 each independently represent an integer of 1 to 10, and $X_1^-$ and $X_2^-$ each independently represent an organic or inorganic anion.

**13.** The method for producing a composition for forming a polymer membrane according to claim 12, wherein the mixed solvent is a solvent obtained by mixing water with a water-soluble organic solvent.

**14.** The method for producing a composition for forming a polymer membrane according to claim 12 or 13, wherein a content of the water-soluble organic solvent is 20% to 40% by mass with respect to a total mass of the mixed solvent.

**15.** The method for producing a composition for forming a polymer membrane according to any one of claims 12 to 14, wherein a content of the component C is 30% to 70% by mass with respect to a mass of total solid contents of the monomer solution.

**16.** A polymer membrane obtained by polymerizing the composition for forming a polymer membrane according to any one of claims 1 to 11 or polymerizing the composition for forming a polymer membrane produced by the method according to any one of claims 12 to 15.

**17.** The polymer membrane according to claim 16, comprising: a porous support.

**18.** The polymer membrane according to claim 16 or 17, wherein the polymerizing is performed by heating and/or irradiation of an energy ray.

**19.** A separation membrane module comprising: the polymer membrane according to claim 17.

**20.** An ion exchange device comprising: the polymer membrane according to claim 17.

## Patentansprüche

**1.** Zusammensetzung zur Bildung einer Polymermembran, enthaltend:

einen Polymerisationsinitiator, der einen Lichtabsorptionskoeffizienten von gleich oder größer als $3 \times 10^2$ $ml \cdot g^{-1} \cdot cm^{-1}$ in Bezug auf Licht mit einer Wellenlänge von 365 nm hat, als Komponente A;
einen Polymerisationsinitiator, der eine Flüssigkeit bei 25°C ist, als Komponente B und
eine polymerisierbare Verbindung, dargestellt durch die Formel CL, als Komponente C,
worin ein Masseverhältnis von Komponente A:Komponente B 15:85 bis 85:15 ist,

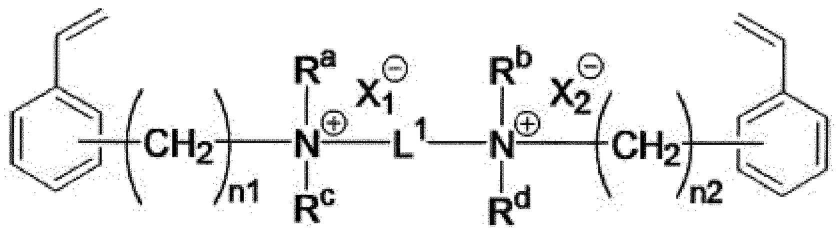

(CL)

worin in der Formel CL $L^1$ eine Alkylengruppe oder Alkenylengruppe ist, $R^a$, $R^b$, $R^c$ und $R^d$ jeweils unabhängig eine Alkylgruppe oder Arylgruppe sind, $R^a$ und $R^b$ und/oder $R^c$ und $R^d$ einen Ring bilden können, indem sie aneinander gebunden sind, n1 und n2 jeweils unabhängig eine ganze Zahl von 1 bis 10 sind und $X_1^-$ und $X_2^-$ jeweils unabhängig ein organisches oder anorganisches Anion sind.

**2.** Zusammensetzung zur Bildung einer Polymermembran gemäß Anspruch 1, worin ein Wassergehalt 10 bis 40 Masse-% in Bezug auf eine Gesamtmasse der Zusammensetzung ist.

**3.** Zusammensetzung zur Bildung einer Polymermembran gemäß Anspruch 1 oder 2, worin die Komponente A zumindest eine der Verbindungen mit den Formeln A-1 bis A-8 enthält.

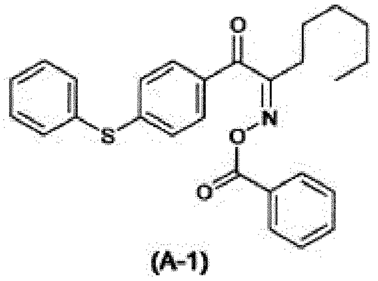

(A-1)

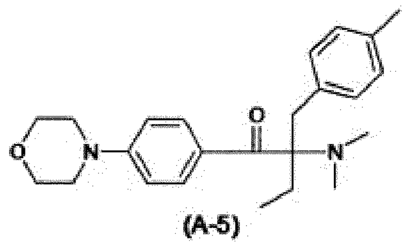

(A-5)

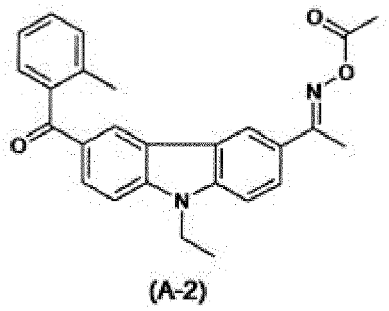

(A-2)

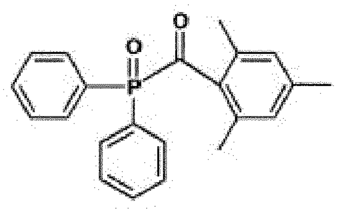

(A-6)

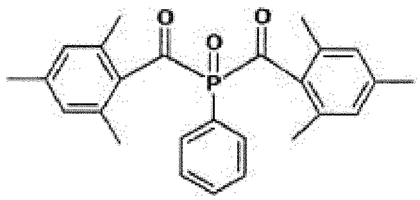

(A-3)

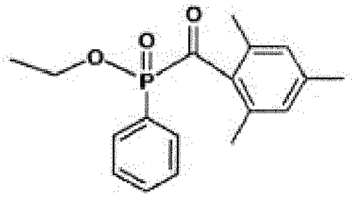

(A-7)

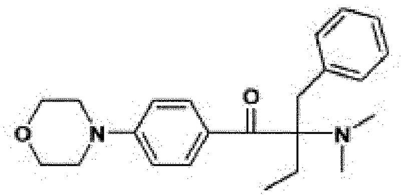

(A-4)

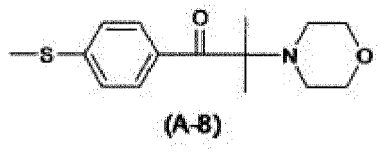

(A-8)

.

**4.** Zusammensetzung zur Bildung einer Polymermembran gemäß einem der Ansprüche 1 bis 3, weiterhin enthaltend:

eine polymerisierbare Verbindung, dargestellt durch die Formel SM

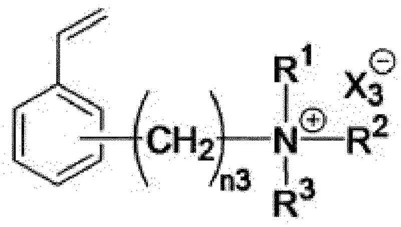

(SM)

worin in der Formel SM, $R^1$, $R^2$ und $R^3$ jeweils unabhängig eine lineare oder verzweigte Alkylgruppe oder eine Arylgruppe sind, $R^1$ und $R^2$ oder $R^1$, $R^2$ und $R^3$ einen aliphatischen Heterozyklus bilden können, indem sie aneinander gebunden sind, n3 eine ganze Zahl von 1 bis 10 ist und $X_3^-$ ein organisches oder anorganisches Anion ist.

**5.** Zusammensetzung zur Bildung einer Polymermembran gemäß Anspruch 4, worin ein Gehalt der polymerisierbaren Verbindung, dargestellt durch die Formel SM, 1 bis 80 Masse-% in Bezug auf eine Masse der gesamten Feststoffgehalte der Zusammensetzung ist.

**6.** Zusammensetzung zur Bildung einer Polymermembran gemäß einem der Ansprüche 1 bis 5, worin ein Gehalt der polymerisierbaren Verbindung, dargestellt durch die Formel CL, 10 bis 98 Masse-% in Bezug auf eine Masse der gesamten Feststoffgehalte der Zusammensetzung ist.

**7.** Zusammensetzung zur Bildung einer Polymermembran gemäß einem der Ansprüche 1 bis 6, worin ein Gehalt der Komponente A 0,2 bis 2,5 Masse-% in Bezug auf eine Gesamtmasse der Zusammensetzung ist.

**8.** Zusammensetzung zur Bildung einer Polymermembran gemäß einem der Ansprüche 1 bis 7, worin ein Masseverhältnis zwischen einem Gehalt der Komponente A und einem Gehalt der Komponente C (Komponente A:Komponente C) 1:99 bis 7:93 ist.

**9.** Zusammensetzung zur Bildung einer Polymermembran gemäß einem der Ansprüche 1 bis 8, worin ein Masseverhältnis zwischen einem Gehalt der Komponente A und einem Gehalt der Komponente B (Komponente A:Komponente B) 25:75 bis 60:40 ist.

**10.** Zusammensetzung zur Bildung einer Polymermembran gemäß einem der Ansprüche 1 bis 9, weiterhin enthaltend ein Lösungsmittel als Komponente D.

**11.** Zusammensetzung zur Bildung einer Polymermembran gemäß Anspruch 10, worin die Komponente D Wasser und ein wasserlösliches organisches Lösungsmittel enthält.

**12.** Verfahren zur Erzeugung einer Zusammensetzung zur Bildung einer Polymermembran, enthaltend:

Auflösen eines Polymeristaionsinitiators als Komponente A, der einen Lichtabsorptionskoeffizienten von gleich oder mehr als $3 \times 10^2$ $ml \cdot g^{-1} \cdot cm^{-1}$ in Bezug auf Licht mit einer Wellenlänge von 365 nm hat, in einem Polymerisationsinitiator als Komponente B, der eine Flüssigkeit bei 25°C ist, zur Herstellung einer gemischten Lösung aus Initiatoren,
Auflösen einer polymerisierbaren Verbindung als Komponente C, dargestellt durch die Formel CL, in einem gemischten Lösungsmittel, erhalten durch Mischen von zwei oder mehreren Lösungsmitteln, zur Herstellung einer Monomerlösung, und
Mischen der gemischten Lösung aus Initiatoren und der Monomerlösung,

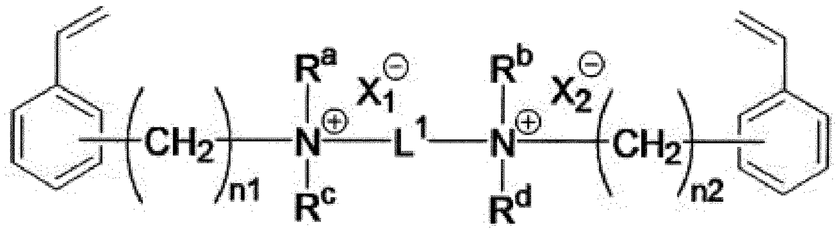

(CL)

worin in der Formel CL $L^1$ eine Alkylengruppe oder Alkenylengruppe ist, $R^a$, $R^b$, $R^c$ und $R^d$ jeweils unabhängig eine Alkylgruppe oder Arylgruppe sind, $R^a$ und $R^b$ und/oder $R^c$ und $R^d$ einen Ring bilden können, indem sie aneinander gebunden sind, n1 und n2 jeweils unabhängig eine ganze Zahl von 1 bis 10 sind und $X_1^-$ und $X_2^-$ jeweils unabhängig ein organisches oder anorganisches Anion sind.

**13.** Verfahren zur Erzeugung einer Zusammensetzung zur Bildung einer Polymermembran gemäß Anspruch 12, worin das gemischte Lösungsmittel ein Lösungsmittel ist, erhalten durch Mischen von Wasser mit einem wasserlöslichen organischen Lösungsmittel.

**14.** Verfahren zur Erzeugung einer Zusammensetzung zur Bildung einer Polymermembran gemäß Anspruch 12 oder 13, worin ein Gehalt des wasserlöslichen organischen Lösungsmittels 20 bis 40 Masse-% in Bezug auf eine Gesamtmasse des gemischten Lösungsmittels ist.

**15.** Verfahren zur Erzeugung einer Zusammensetzung zur Bildung einer Polymermembran gemäß einem der Ansprüche 12 bis 14, worin ein Gehalt der Komponente C 30 bis 70 Masse-% in Bezug auf eine Masse eines gesamten Feststoffgehaltes der Monomerlösung ist.

**16.** Polymermembran, erhalten durch Polymerisieren der Zusammensetzung zur Bildung einer Polymermembran gemäß einem der Ansprüche 1 bis 11 oder Polymerisieren der Zusammensetzung zur Bildung einer Polymermembran,

erzeugt durch das Verfahren gemäß einem der Ansprüche 12 bis 15.

**17.** Polymermembran gemäß Anspruch 16, enthaltend einen porösen Träger.

**18.** Polymermembran gemäß Anspruch 16 oder 17, worin die Polymerisation durch Erwärmen und/oder Bestrahlung mit einem Energiestrahl durchgeführt wird.

**19.** Trennmembranmodul, enthaltend die Polymermembran gemäß Anspruch 17.

**20.** Ionenaustauschvorrichtung, enthaltend die Polymembran gemäß Anspruch 17.

**Revendications**

**1.** Composition pour former une membrane polymère, comprenant :

un initiateur de polymérisation, qui a un coefficient d'absorption de lumière égal ou supérieur à $3 \times 10^2$ mL·g$^{-1}$·cm$^{-1}$ par rapport à une lumière ayant une longueur d'onde de 365 nm, en tant que composant A ;
un initiateur de polymérisation qui est un liquide à 25 °C en tant que composant B ; et
un composé polymérisable représenté par la formule CL en tant que composant C,
dans laquelle un rapport massique composant A:composant B est de 15:85 à 85:15,

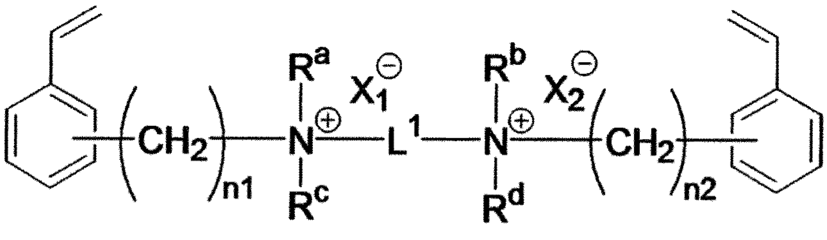

(CL)

dans la formule CL, $L^1$ représente un groupe alkylène ou un groupe alcénylène, $R^a$, $R^b$, $R^c$, et $R^d$ représentent chacun indépendamment un groupe alkyle ou un groupe aryle, $R^a$ et $R^b$, et/ou $R^c$ et $R^d$ peuvent former un cycle en étant liés l'un à l'autre, n1 et n2 représentent chacun indépendamment un nombre entier compris entre 1 et 10, et $X_1^-$ et $X_2^-$ représentent chacun indépendamment un anion organique ou inorganique.

**2.** Composition pour former une membrane polymère selon la revendication 1,
dans laquelle la teneur en eau est de 10 % à 40 % en masse par rapport à une masse totale de la composition.

**3.** Composition pour former une membrane polymère selon la revendication 1 ou 2,
dans laquelle le composant A contient au moins l'un des composés représentés par les formules A-1 à A-8,

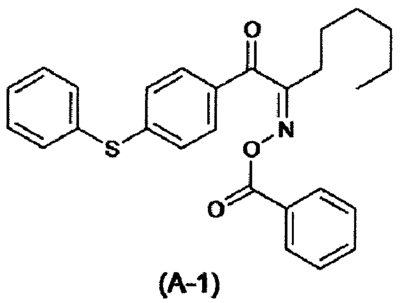

(A-1)

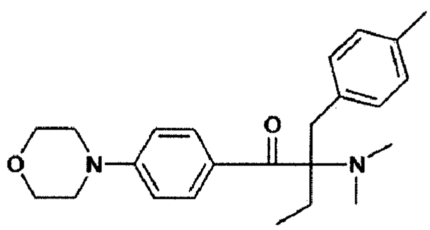

(A-5)

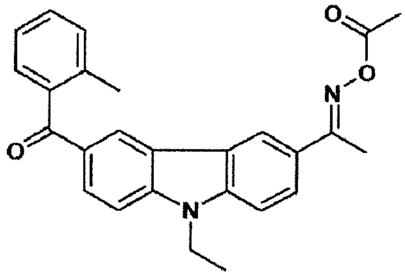

(A-2)

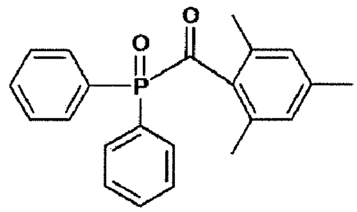

(A-6)

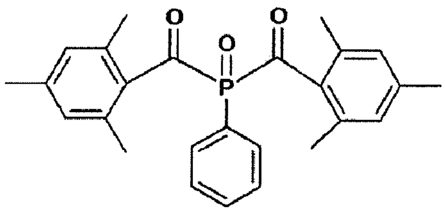

(A-3)

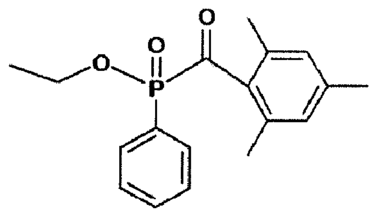

(A-7)

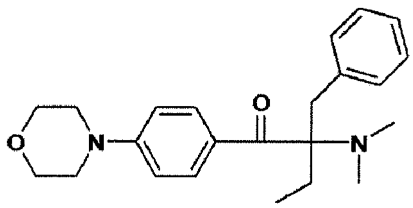

(A-4)

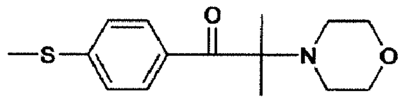

(A-8)

**4.** Composition pour former une membrane polymère selon l'une quelconque des revendications 1 à 3, comprenant en outre :

un composé polymérisable représenté par la formule SM,

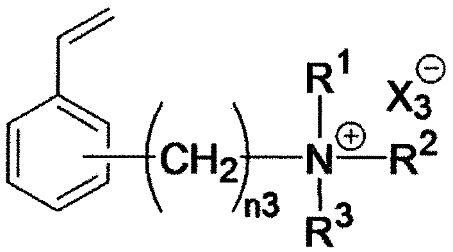

(SM)

dans la formule SM, $R^1$, $R^2$, et $R^3$ représentent chacun indépendamment un groupe alkyle linéaire ou ramifié et un groupe aryle, $R^1$ et $R^2$, ou $R^1$, $R^2$, et $R^3$ peuvent former un hétérocycle aliphatique en étant liés les uns aux autres, n3 représente un nombre entier compris entre 1 et 10, et $X_3^-$ représente un anion organique ou inorganique.

**5.** Composition pour former une membrane polymère selon la revendication 4, dans laquelle une teneur en composé polymérisable représenté par la formule SM est comprise entre 1 % et 80 % en masse par rapport à une masse de la teneur totale en matières solides de la composition.

**6.** Composition pour former une membrane polymère selon l'une quelconque des revendications 1 à 5, dans laquelle une teneur en composé polymérisable représenté par la formule CL est comprise entre 10 % et 98 % en masse par rapport à une masse de la teneur totale en matières solides de la composition.

**7.** Composition pour former une membrane polymère selon l'une quelconque des revendications 1 à 6, dans laquelle une teneur en composant A est de 0,2 % à 2,5 % en masse par rapport à une masse totale de la composition.

**8.** Composition pour former une membrane polymère selon l'une quelconque des revendications 1 à 7, dans laquelle un rapport massique entre une teneur en composant A et une teneur en composant C (composant A:composant C) est de 1:99 à 7:93.

**9.** Composition pour former une membrane polymère selon l'une quelconque des revendications 1 à 8, dans laquelle un rapport massique entre une teneur en composant A et une teneur en composant B (composant A:composant B) est de 25:75 à 60:40.

**10.** Composition pour former une membrane polymère selon l'une quelconque des revendications 1 à 9, comprenant en outre :
un solvant en tant que composant D.

**11.** Composition pour former une membrane polymère selon la revendication 10, dans laquelle le composant D contient de l'eau et un solvant organique hydrosoluble.

**12.** Procédé de production d'une composition pour former une membrane polymère, comprenant :

la dissolution d'un initiateur de polymérisation en tant que composant A, qui a un coefficient d'absorption de lumière égal ou supérieur à $3 \times 10^2$ $mL \cdot g^{-1} \cdot cm^{-1}$ par rapport à une lumière ayant une longueur d'onde de 365 nm, dans un initiateur de polymérisation en tant que composant B qui est un liquide à 25 °C pour préparer une solution mélangée d'initiateurs ;
la dissolution d'un composé polymérisable en tant que composant C représenté par la formule CL dans un solvant mélangé obtenu en mélangeant ensemble deux ou plus de deux solvants pour préparer une solution de monomères ; et
le mélange ensemble de la solution mélangée d'initiateurs et la solution de monomères,

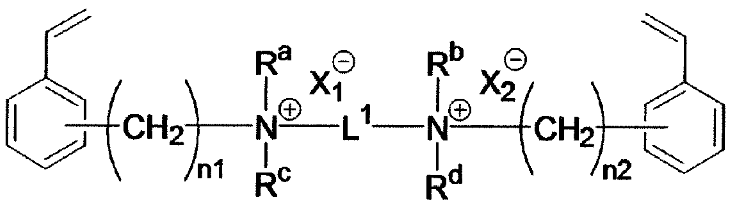

(CL)

dans la formule CL, $L^1$ représente un groupe alkylène ou un groupe alcénylène, $R^a$, $R^b$, $R^c$, et $R^d$ représentent chacun indépendamment un groupe alkyle ou un groupe aryle, $R^a$ et $R^b$, et/ou $R^c$ et $R^d$ peuvent former un cycle en étant liés l'un à l'autre, n1 et n2 représentent chacun indépendamment un nombre entier compris entre 1 et 10, et $X_1^-$ et $X_2^-$ représentent chacun indépendamment un anion organique ou inorganique.

**13.** Procédé de production d'une composition pour former une membrane polymère selon la revendication 12, dans lequel le solvant mélangé est un solvant obtenu en mélangeant de l'eau avec un solvant organique hydrosoluble.

**14.** Procédé de production d'une composition pour former une membrane polymère selon la revendication 12 ou 13, dans lequel une teneur en solvant organique hydrosoluble est de 20 % à 40 % en masse par rapport à une masse totale du solvant mélangé.

**15.** Procédé de production d'une composition pour former une membrane polymère selon l'une quelconque des revendications 12 à 14,
dans lequel une teneur en composant C est comprise entre 30 % et 70 % en masse par rapport à une masse de

la teneur totale en matières solides de la solution de monomères.

**16.** Membrane polymère obtenue par polymérisation de la composition pour former une membrane polymère selon l'une quelconque des revendications 1 à 11 ou par polymérisation de la composition pour former une membrane polymère produite par le procédé selon l'une quelconque des revendications 12 à 15.

**17.** Membrane polymère selon la revendication 16, comprenant :
un support poreux.

**18.** Membrane polymère selon la revendication 16 ou 17,
dans laquelle la polymérisation est réalisée par chauffage et/ou irradiation d'un rayon d'énergie.

**19.** Module de membrane de séparation comprenant :
la membrane polymère selon la revendication 17.

**20.** Dispositif échangeur d'ions comprenant :
la membrane polymère selon la revendication 17.

FIG. 1

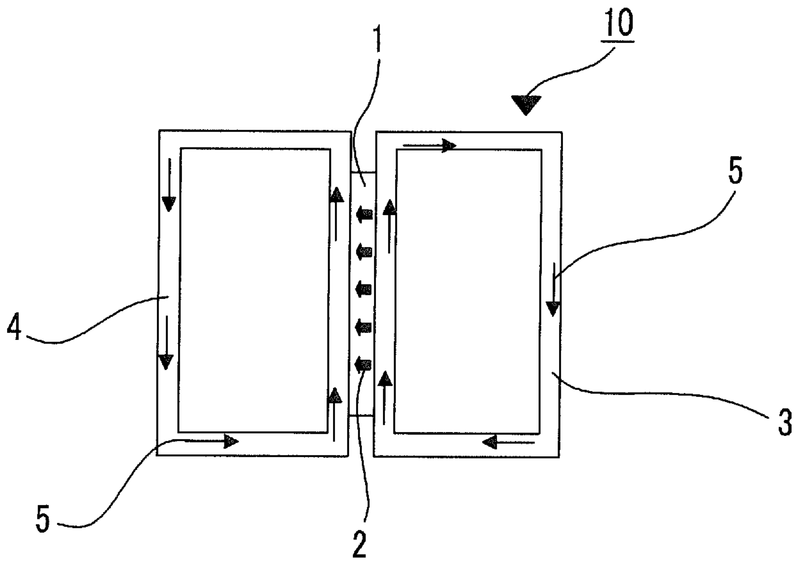

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012079619 A
- JP 2005066599 A
- JP 2000080068 A
- JP 2001233842 A
- JP 2004534797 A
- JP 2007231000 A
- JP 2009134289 A
- JP 60008047 B
- JP S608047 B
- JP 63040799 B
- JP S6340799 B
- JP 3101686 A
- JP H03101686 A
- JP 5345790 A
- JP H05345790 A
- JP 6298818 A
- JP H06298818 A